(19) Europäisches Patentamt
European Patent Office
Office européen des brevets

(11) EP 1 551 938 B1

(12) # EUROPÄISCHE PATENTSCHRIFT

(45) Veröffentlichungstag und Bekanntmachung des Hinweises auf die Patenterteilung:
**05.07.2006 Patentblatt 2006/27**

(21) Anmeldenummer: **03750601.1**

(22) Anmeldetag: **23.09.2003**

(51) Int Cl.:
***C09K 19/58*** *(2006.01)*

(86) Internationale Anmeldenummer:
**PCT/EP2003/010547**

(87) Internationale Veröffentlichungsnummer:
**WO 2004/037948 (06.05.2004 Gazette 2004/19)**

(54) **CHIRALE DOTIERSTOFFE MIT LATERAL ALKYLIERTEM PHENYLBAUSTEIN**

CHIRAL DOPANTS HAVING A LATERALLY ALKYLATED PHENYL STRUCTURAL ELEMENT

IMPURETES DE DOPAGE CHIRALES COMPORTANT UN MODULE PHENYLE ALKYLE LATERALEMENT

(84) Benannte Vertragsstaaten:
**AT BE BG CH CY CZ DE DK EE ES FI FR GB GR HU IE IT LI LU MC NL PT RO SE SI SK TR**

(30) Priorität: **18.10.2002 DE 10248765**

(43) Veröffentlichungstag der Anmeldung:
**13.07.2005 Patentblatt 2005/28**

(73) Patentinhaber: **Merck Patent GmbH**
**64293 Darmstadt (DE)**

(72) Erfinder:
- **REIFFENRATH, Volker**
  **64380 Rossdorf (DE)**
- **HECKMEIER, Michael**
  **69502 Hemsbach (DE)**

(56) Entgegenhaltungen:
**EP-A- 0 609 566**
**DE-A- 4 322 905**
**DE-A- 4 328 761**
**DE-A- 19 746 289**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft chirale Dotierstoffe mit lateral alkyliertem Phenylbaustein, sowie flüssigkristalline Medien, die diese Verbindungen enthalten. Femer betrifft die vorliegende Erfindung Flüssigkristallanzeigen, die die erfindungsgemäßen Flüssigkristallmischungen enthalten.

In den bekannten Flüssigkristallanzeigen werden die Flüssigkristalle, in der Regel flüssigkristalline Gemische, als Dielektrika verwendet, deren optische Eigenschaften sich bei Anlegen einer elektrischen Spannung reversibel ändern. Diese Flüssigkristallanzeigen verwenden verschiedene elektrooptische Effekte. Die gebräuchlichsten hiervon sind der TN-Effekt (Englisch "twisted nematic"), mit einer homogenen, nahezu planaren Ausgangsorientierung der Flüssigkristalle und einer um ca. 90° verdrillten nematischen Struktur), der STN-Effekt (Englisch "supertwisted nematic") und der SBE-Effekt (Englisch "supertwisted birefringence effect"), die beide, wie auch der TN-Effekt, eine verdrillte, homogene Ausgangsorientierung der Flüssigkristalle verwenden, wobei hier jedoch die Moleküle einen signifikanten Anstellwinkel an der Oberfläche der Substrate (Englisch "surface tilt angle" kurz "tilt angle") haben und die Verdrillung (Englisch "twist") zwischen den Substraten deutlich größer als 90° ist. In dieser Anmeldung werden im folgenden, wenn nicht explizit anders angegeben, der STN-Effekt und der SBE-Effekt beide gemeinsam als STN-Effekt bezeichnet. Der Anstellwinkel an der Oberfläche beträgt bei den STN-Anzeigen typischer Weise zwischen 2° und 10°. Er ist um so höher, je größer der Verdrillungswinkel ist. Die Verdrillungswinkel betragen in der Regel ca. 180° bis 240°, manchmal auch bis 260° oder 270° und in einigen Fällen sogar noch mehr.

Die Verdrillung des Flüssigkristallmediums von mehr als 90° wird durch den Einsatz von chiralen Flüssigkristallmischungen erreicht, deren natürliche Verdrillung entsprechend der Schichtdicke der Flüssigkristallschicht gewählt wird. Hierzu stehen dem Fachmann zwei Möglichkeiten zur Verfügung. Die erste besteht in der Verwendung von Flüssigkristallen, die selbst chiral sind, also von cholesterischen Flüssigkristallen. Solche Flüssigkristalle besitzen selbst eine verdrillte Struktur. In einer homogen orientierten Anordnung zwischen zwei Substraten, die Grand-Jean Textur genannt wird, ist der Direktor der Moleküle in vertikaler Richtung, also über die Dicke der Schicht, schraubenförmig verdrillt.

Die charakteristische Länge für eine komplette Drehung um 360° wird der cholesterische Pitch (P) genannt. Die Verwendung cholesterischer Flüssigkristalle ist jedoch oft nicht besonders vorteilhaft, da der cholesterische Pitch cholesterischer Flüssigkristalle sich nicht einfach an die Schichtdicken der üblicherweise verwendeten Zellen der Anzeigen anpassen läßt. Zusätzlich hängt der cholesterische Pitch dieser Flüssigkristalle oft in unvorteilhafter Weise und in vielen Fällen stark von der Temperatur ab. Auch führt eine Veränderung der Zusammensetzung der Mischungen meist zu starken Änderungen des cholesterischen Pitches.

Aus diesem Grunde wird in den meisten praktischen Fällen eine nematische Flüssigkristallmischung mit einer chiralen Substanz versetzt, die die gewünschte Verdrillung induziert. Hierbei ist es nicht besonders wesentlich, ob diese Verbindung selbst eine Mesophase aufweist. Wichtiger ist vielmehr, dass sie ein hohes Verdrillungsvermögen für die nematische Basismischung (auch Wirtsmischung, Englisch "host mixture" genannt) besitzt und dass sie in den üblicherweise eingesetzten Konzentrationen die Eigenschaften der Basismischung, insbesondere deren Klärpunkt, nicht zu stark verändert. Somit werden in der Regel bevorzugt Verbindungen eingesetzt, die selbst eine mesogene Struktur aufweisen oder sogar cholesterisch sind.

Die cholesterischen Phasen, die durch Zugabe chiraler Substanzen zu nematischen Flüssigkristallen induziert werden, werden oft als chiral nematische Phasen bezeichnet. In der vorliegenden Anmeldung werden jedoch auch diese als cholesterische Phasen bezeichnet, wenn nicht explizit anders angegeben.

Der cholesterische Pitch, der durch Zugabe chiraler Substanzen (Dotierstoffe) zu nematischen Flüssigkristallen induziert wird, hängt bei gegebener Temperatur, neben der Enantiomerenreinheit des chiralen Dotierstoffs, insbesondere von der eingesetzten Konzentration des Dotierstoffs (c) und von dessen Verdrillungsvermögen ab. Dieses Verdrillungsvermögen wird HTP (Englisch "helical twisting power") genannt. In erster Näherung ist der induzierte cholesterische Pitch (P) umgekehrt proportional zum Produkt aus HTP und eingesetzter Konzentration des Dotierstoffs, wie in Gleichung (1) gezeigt.

$$P = (HTP \cdot c)^{-1} \qquad (1)$$

Bei STN-Anzeigen werden typischerweise Flüssigkristallmischungen mit einem Verhältnis des cholesterischen Pitchs zur Schichtdicke (d/P) im Bereich von 0,4 bis 0,8, oft von ca. 0,5 verwendet.

Aber auch in TN-Anzeigen werden chirale Flüssigkristallmischungen verwendet, hier zur Vermeidung der Verdrillung mit dem umgekehrten Drehsinn (Englisch "reverse twist"). Deren Auftreten würde zur Bildung von Domänen und damit zu einer Verringerung des Kontrasts führen. Bei TN-Anzeigen werden in der Regel cholesterische Flüssigkristallmischungen mit einem deutlich kleineren d/P-Verhältnis verwendet, als in STN-Anzeigen, da größere d/P-Werte in den meisten Fällen zu einer Erhöhung der Schwellenspannung führen. Typischerweise betragen die Werte hier ca. 0,01 bis 0,3, oft ca. 0,1.

Neben diesen Anzeigetypen gibt es weitere Flüssigkristallanzeigen, die mit chiralen Verbindungen dotierte Flüssigkristallmischungen verwenden.

Als chirale Dotierstoffe sind z.B. die Verbindungen C15, CB15, R-811 und S-811, R-1011 und S-1011 sowie R-2011 und S-2011, alle Merck KGaA, bekannt.

Bei diesen und ähnlichen elektrooptischen Effekten werden flüssigkristalline Medien mit positiver dielektrischer Anisotropie ($\Delta\varepsilon$) verwendet.

Neben den genannten elektrooptischen Effekten, welche Flüssigkristallmedien mit positiver dielektrischer Anisotropie benötigen, gibt es andere elektrooptische Effekte welche Flüssigkristallmedien mit negativer dielektrischer Anisotropie verwenden, wie z.B. der ECB-Effekt ("Electrically Controlled Birefringence") und seine Unterformen DAP ("Deformation of Aligned Phases"), VAN ("Vertically Aligned Nematics") und CSH ("Colour Super Homeotropics"). Bei diesen und ähnlichen elektrooptischen Effekten werden flüssigkristalline Medien mit negativer dielektrischer Anisotropie ($\Delta\varepsilon$) verwendet.

Ein elektrooptischer Effekt mit hervorragender, kleiner Blickwinkelabhängigkeit des Kontrasts verwendet axial symmetrische Micropixel (ASM von Englisch "Axially Symmetric Micro Pixel"). Bei diesem Effekt ist der Flüssigkristall jedes Pixels zylinderförmig von einem Polymermaterial umgeben. Dieser Mode eignet sich besonders zur Kombination mit der Adressierung durch Plasmakanäle. So lassen sich insbesondere großflächige PA LCDs mit guter Blickwinkelabhängigkeit des Kontrasts realisieren.

Der in letzter Zeit verstärkt eingesetzte IPS-Effekt ("In Plane Switching") kann sowohl dielektrisch positive wie auch dielektrisch negative Flüssigkristallmedien verwenden, ähnlich wie auch "guest host"-Anzeigen, also Gast/Wirt-Anzeigen, die Farbstoffe je nach verwandtem Anzeigemodus entweder in dielektrisch positiven oder in dielektrisch negativen Medien einsetzen können.

Die Bildpunkte der Flüssigkristallanzeigen können direkt angesteuert werden, zeitsequentiell, also im Zeitmultiplexverfahren oder mittels einer Matrix von aktiven, elektrisch nichtlinearen Elementen angesteuert werden.

Die bislang gebräuchlichsten AMDs (Englisch "active matrix displays") verwenden diskrete aktive elektronische Schaltelemente, wie z. B. dreipolige Schaltelemente wie MOS (Englisch "metal oxide silicon") Transistoren oder Dünnfilmtransistoren (TFTs von Englisch "thin film transistors") oder Varistoren oder 2-polige Schaltelemente wie z.B. MIMs (Englisch "metall insulator metal") Dioden, Ringdioden oder "back to back"-Dioden. Bei den TFTs werden verschiedene Halbleitermaterialien, überwiegend Silizium oder auch Cadmiumselenid, verwendet. Insbesondere wird amorphes Silizium oder polykristallines Silizium verwendet.

So werden in der DE 43 22 905 A1 chirale 2,6-Difluorbenzol-Derivate der Formel:

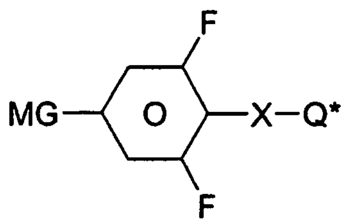

offenbart,
worin

- MG eine Estergruppen-freie, mesogene Gruppe,
- X O oder $CH_2$, und
- Q* einen chiralen Rest mit mindestens einem chiralen C-Atom

bedeuten.

Der Einsatz dieser Derivate als Dotierstoff in geneigt smektischen Flüssigkristallphasen führt schon bei geringen Zumischungen zu einer starken Verdrillung in der cholesterischen Phase. Offenbart werden auch elektrooptische Anzeigen enthaltend diese flüssigkristallinen Medien.

In der EP 0 609 566 A1 werden ebenfalls flüssigkristalline Zusammensetzungen offenbart, die chirale Verbindungen der Formel

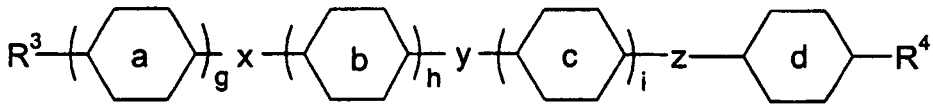

enthalten, worin die Ringe

| | |
|---|---|
| a, b, c und d | unabhängig voneinander trans-1,4-Cyclohexylen, 1-Cyclohexen-1,4-diyl oder 1,4-Phenylen, |
| g, h und i | jeweils 0 oder 1, mit $(g + h + i) \geq 1$, |
| x, y und z | unabhängig voneinander eine Einfachbindung, $-CH_2CH_2-$, -CH=CH-, -C≡C-, $-OCH_2-$ oder $-CH_2O-$, |
| $R^3$ und $R^4$ | unabhängig voneinander H, $C_nH_{2n+1}-$, $C_nH_{2n+1}-O-$, $C_nH_{2n+1}-O-C_kH_{2k}-$, $C_nH_{2n-1}-$, $C_nH_{2n-1}-O-$, $C_nH_{2n-1}-O-C_kH_{2k}-$, $C_nH_{2n-3}-$, $C_nH_{2n-3}-O-$, $C_nH_{2n-3}-O-C_kH_{2k}-$, und |
| n und k | unabhängig voneinander eine ganze Zahl von 1 bis 18, mit $(n + k) \leq 18$, |

bedeuten,
wobei zumindest ein H-Atom in der Formel durch ein F-Atom ersetzt sein kann und zumindest einer der Reste $R^3$, $R^4$, x, y und z ein asymmetrisches Kohlenstoffatom aufweist.

Nachteilig an den aus dem Stand der Technik bekannten, chiralen Dotierstoffen ist, dass sie nur zu einer unzureichenden Verdrillung in LC-Mischungen führen und darüber hinaus die Eigenschaften der LC-Mischungen negativ beeinflussen.

Ausgehend von dem genannten Stand der Technik kann es als Aufgabe der vorliegenden Erfindung angesehen werden, neue, dem Stand der Technik überlegene, chirale Dotierstoffe, insbesondere für TFT-LC-Mischungen, bereitzustellen, welche vorzugsweise die Eigenschaften des LC-Materials nicht negativ beeinflussen.

Überraschenderweise wurde gefunden, dass die erfindungsgemäßen alkylsubstituierten Dotierstoffe eine deutlich höhere Drehkraft (HTP) aufweisen, als die entsprechenden H- oder F-substituierten Verbindungen.

Gegenstand der vorliegenden Erfindung sind somit chirale Dotierstoffe mit lateral alkyliertem Phenylbaustein der allgemeinen Formel I:

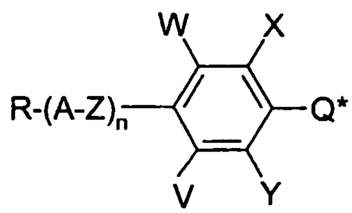

(I)

worin:

| | |
|---|---|
| Q* | ein Baustein mit asymmetrischem C-Atom, |
| R | -H, einen unsubstituierten oder einen mindestens einfach durch Halogen substituierten Alkyl- oder Alkenylrest mit 1 bis 12 C-Atomen, worin auch eine oder mehrere nicht benachbarte $-CH_2-$ Gruppen durch -O- oder -S- und/oder -C≡C- ersetzt sein können, sowie F oder Cl, |
| A | unabhängig voneinander eine Einfachbindung, 1,4-Phenylen, worin auch ein oder mehrere H-Atome gegen F ersetzt sein können, 1,4-Cyclohexylen, worin auch eine oder zwei $CH_2$-Gruppen durch -O- ersetzt sein können, oder 1,4-Bicyclo(2.2.2)octanyl, |
| Z | unabhängig voneinander eine Einfachbindung, $-CH_2-CH_2-$, $-O-CH_2-$, $-CH_2-O-$, $-CF_2-O-$, $-O-CF_2-$, $-CF_2-CF_2-$ oder -C≡C-, |

V, W unabhängig voneinander, lineares oder verzweigtes, unsubstituiertes oder einfach bzw. mehrfach durch Halogen substituiertes Alkyl oder Alkyloxy mit 1 bis 12 C-Atomen, H, F oder Cl,

X, Y unabhängig voneinander, lineares oder verzweigtes, unsubstituiertes oder einfach bzw. mehrfach durch Halogen substituiertes Alkyl oder Alkyloxy mit o bzw. p C-Atomen, wobei o bzw. p unabhängig voneinander, gleich oder verschieden, ganze Zahlen im Bereich von 1 bis 12 sind, H, F, Cl, wobei im Falle von H, F und Cl o bzw. p = 0 ist, oder Trimethylsilyl, und

n 1 bis 3, vorzugsweise 2 oder 3,

bedeuten,
mit der Maßgabe, dass X und/oder Y entweder ein unsubstituierter oder ein Halogen substituierter Alkyl- oder Alkyloxyrest mit o bzw. p C-Atomen, wobei die Summe o + p ≥ 2 ist, oder ein Trimethylsilylrest ist.

Bevorzugt sind Strukturen, bei denen das chirale Zentrum nicht weiter als 3 Bindungen (oder 2 Atome) vom ortho-alkylierten Aromaten entfernt ist.

Des weiteren bevorzugt sind Strukturen welche keine hydrolysierbaren Bausteine wie etwa Esterbrücken enthalten.

Bevorzugt als Baustein Q* mit asymmetrischem C- Atom ist ebenfalls:

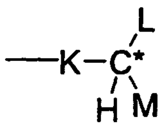

worin:

K: $-CH_2-$, -O-, $-CH_2CH_2-$, $-OCH_2-$, $-CH_2O-$ $-OCF_2-$, $-CF_2O-$ -C≡C-, -CH=CH- oder eine Einfachbindung, und

L, M: Alkyl, Cycloalkyl, O-Alkyl, Alkenyl, Alkinyl oder Aryl, wobei L ungleich M sein muss,

bedeuten.

Besonders bevorzugt als Baustein Q* mit asymmetrischem C-Atom sind:

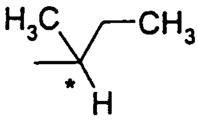 (a)

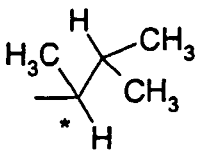 (b)

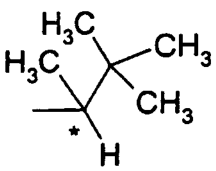 (c)

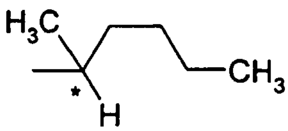 (d)

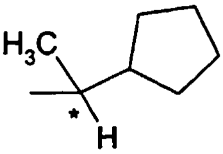 (e) 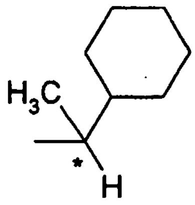 (f)

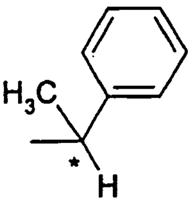 (g) 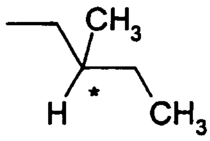 (h)

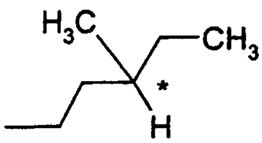 (i) 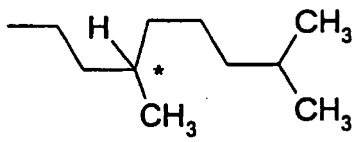 (k)

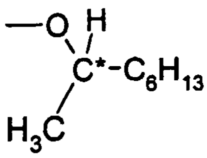 (m) 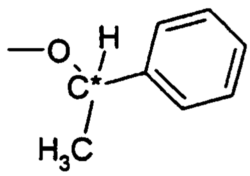 (n)

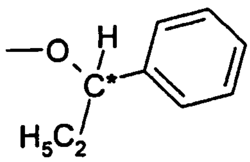 (o) 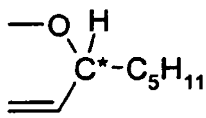 (p)

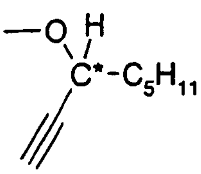 (q) 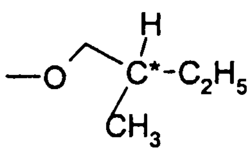 (r)

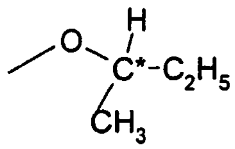

(s)

Insbesondere bevorzugt sind die genannten Bausteine (h), (i), (m), (r) und (s).
Bevorzugt sind chirale Dotierstoffe mit folgendem Grundkörper:

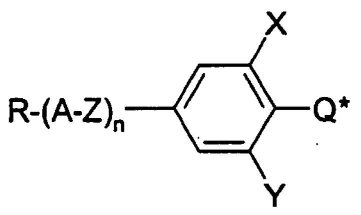

(Ia)

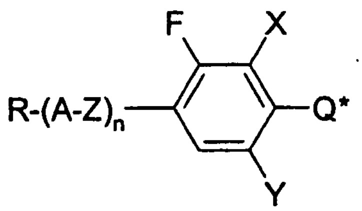

(Ib)

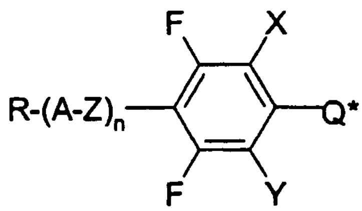

(Ic)

wobei die folgenden Strukturen besonders bevorzugt sind:

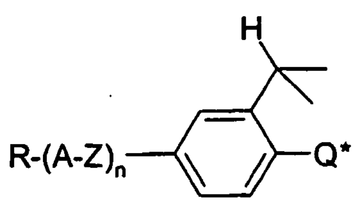

(Iaa)

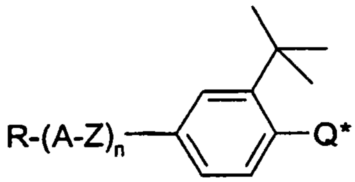

(Iab)

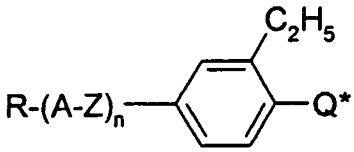

(Iac)

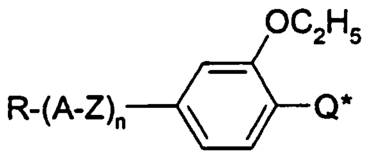

(Iad)

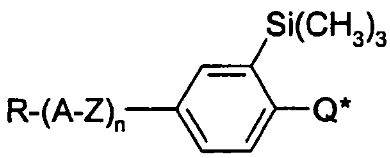

(Iae)

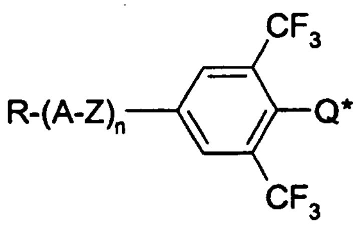

(Iaf)

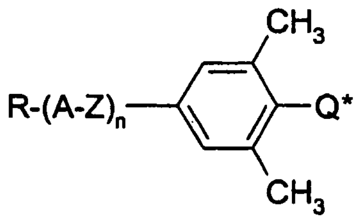

(Iag)

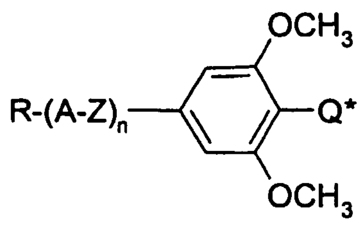

(Iah)

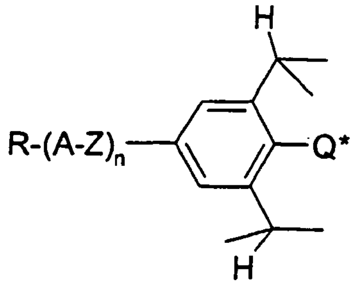

(Iai)

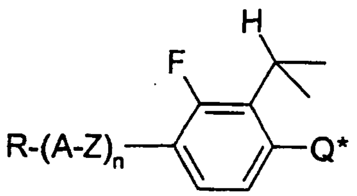

(Iba)

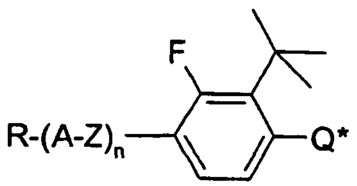

(Ibb)

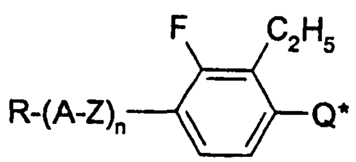

(Ibc)

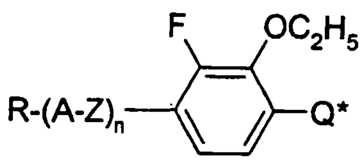

(Ibd)

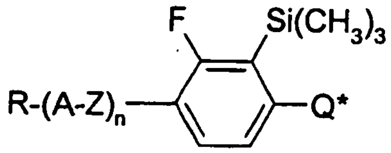

(Ibe)

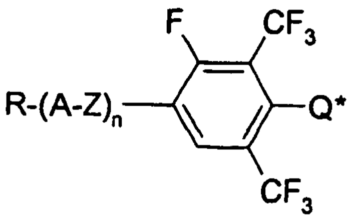

(Ibf)

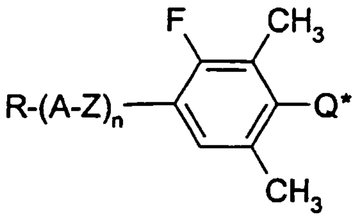

(Ibg)

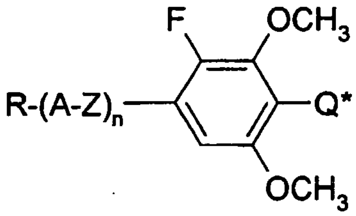

(Ibh)

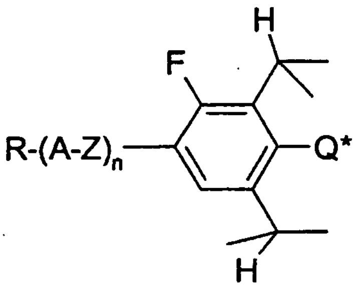

(Ibi)

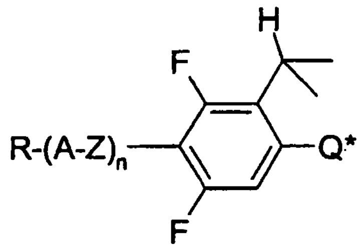

(Ica)

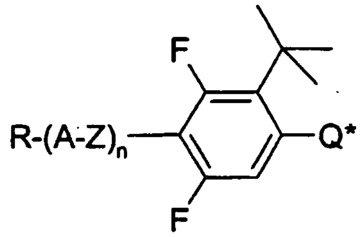

(Icb)

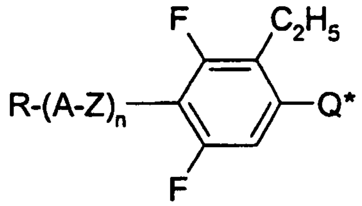

(Icc)

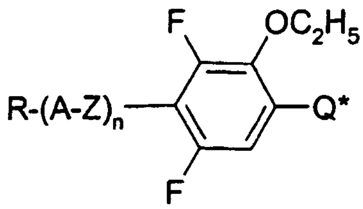

(Icd)

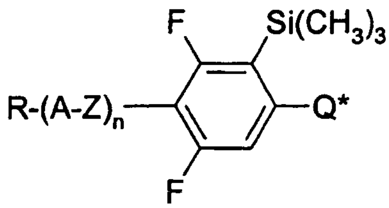

(Ice)

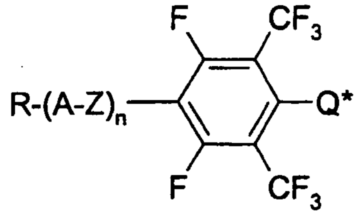

(Icf)

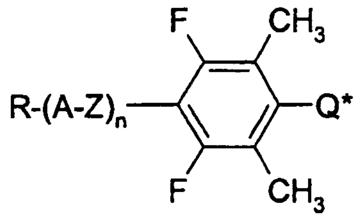

(Icg)

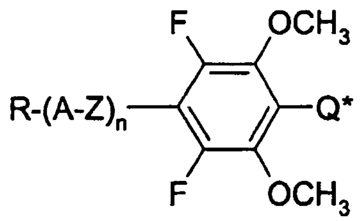

(Ich)

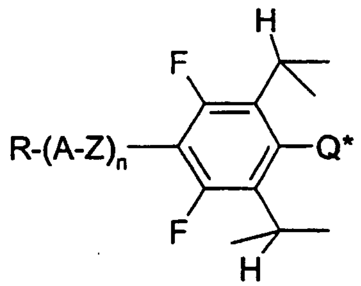

(Ici)

Insbesondere bevorzugt sind die genannten Bausteine (Iab), (Iac), (Iag) und (Ibe).

Bevorzugt als Baustein R-$(A-Z)_n$ sind:

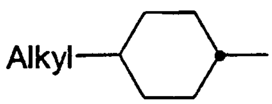

(1)

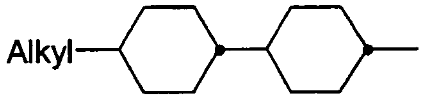

(2)

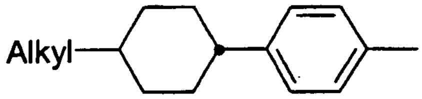

(3)

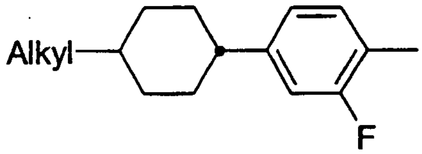

(4)

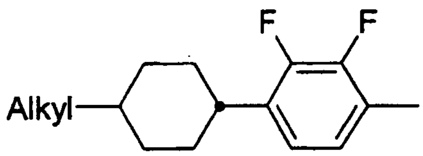

(5)

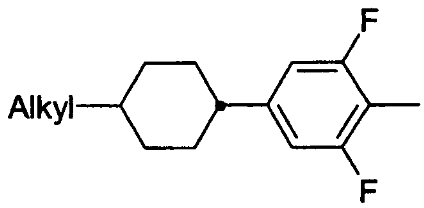

(6)

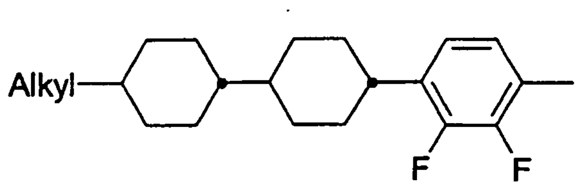

(7)

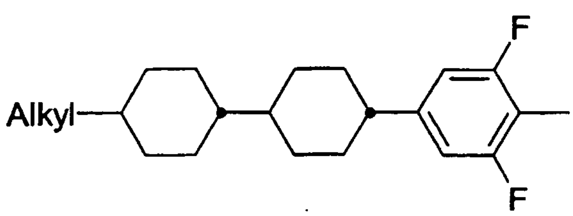

(8)

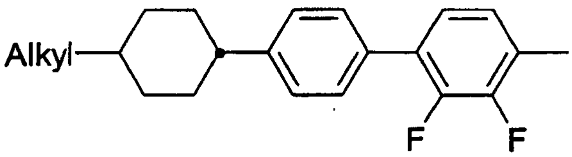

(9)

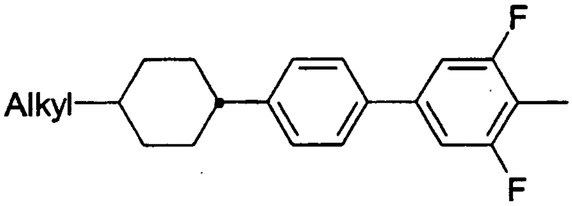

(10)

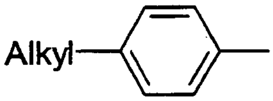

(11)

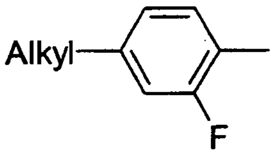

(12)

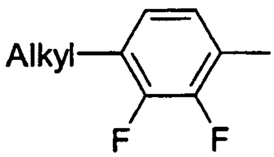

(13)

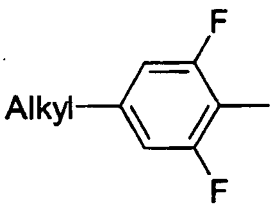

(14)

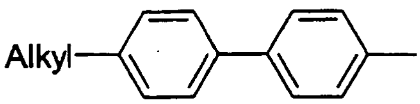

(15)

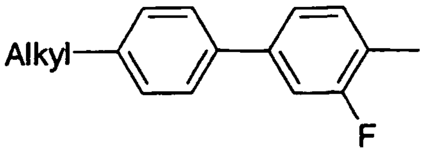

(16)

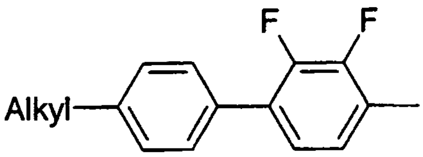

(17)

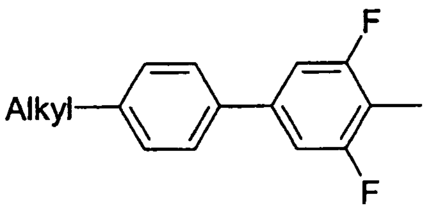

(18)

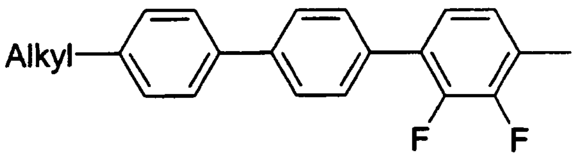

(19)

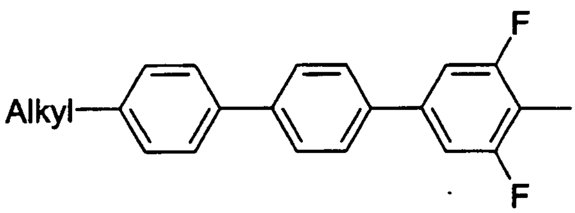

(20)

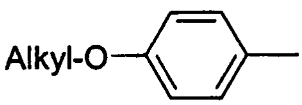

(21)

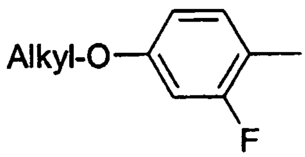

(22)

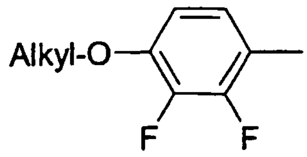

(23)

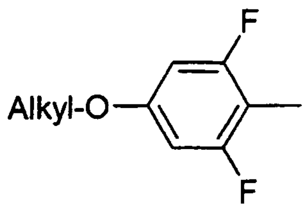

(24)

wobei Alkyl ein Alkylrest mit 1 bis 12 C-Atomen bedeutet, der geradkettig oder verzweigt sein kann. Vorzugsweise ist er geradkettig, hat 1, 2, 3, 4, 5, 6 oder 7 C-Atome und ist demnach vorzugsweise Methyl, Ethyl, Propyl, Butyl, Pentyl, Hexyl oder Heptyl;

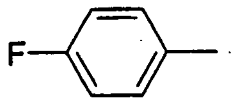

(25)

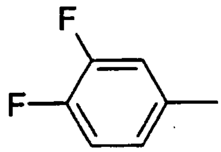

(26)

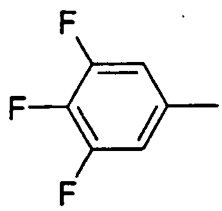

(27)

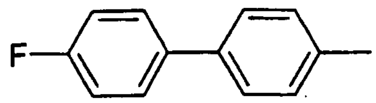

(28)

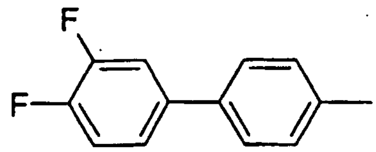

(29)

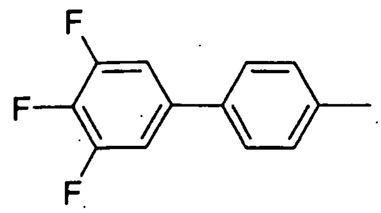

(30)

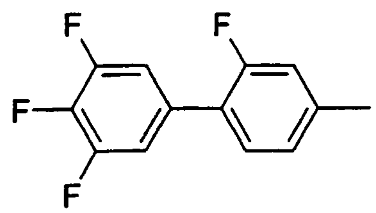

(31)

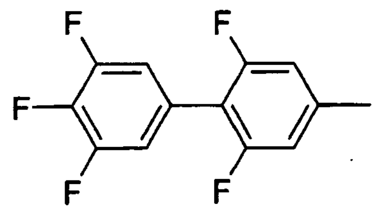

(32)

Besonders bevorzugt als Bausteine R-(A-Z)$_n$ sind die genannten Gruppen (2) bis (10), (15) bis (20) und (28) bis (32) und insbesondere die Gruppen (5), (7), (9), (17) und (19).

Besonders bevorzugt als chirale Dotierstoffe mit lateral alkyliertem Phenylbaustein sind die folgenden Verbindungen:

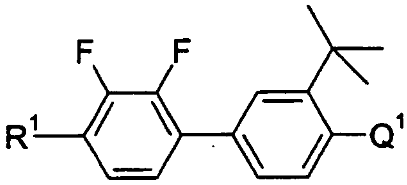

(Iab')

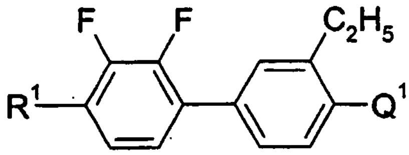

(Iac')

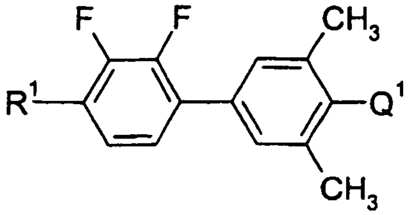

(Iag')

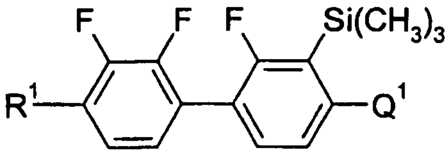

(Ibe')

mit

| $R^1$ | | $Q^1$ | |
|---|---|---|---|
| | | | |
| 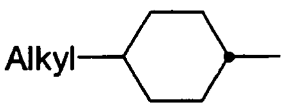 | (5') | 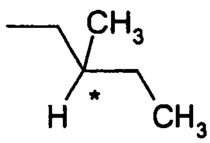 | (h) |
| | | | |
| 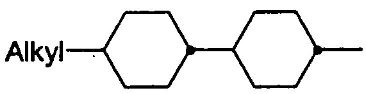 | (7') | 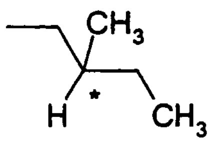 | (h) |
| | | | |

Tabelle fortgesetzt

| $R^1$ | | $Q^1$ | |
|---|---|---|---|
| 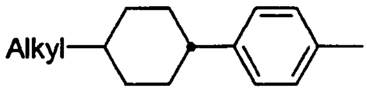 | (9') | 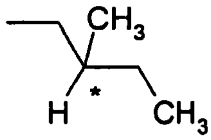 | (h) |
| | | | |
| 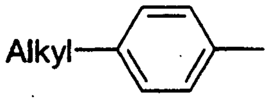 | (17') | 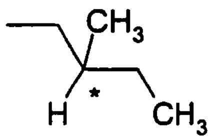 | (h) |
| | | | |
| 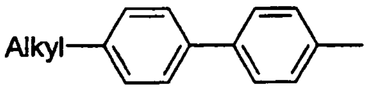 | (19') | 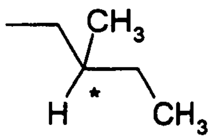 | (h) |
| | | | |
| 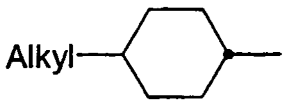 | (5') | 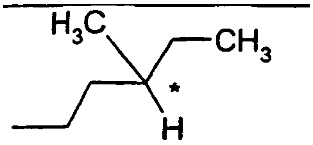 | (i) |
| | | | |
| 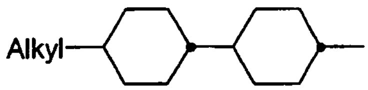 | (7') | 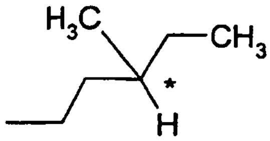 | (i) |
| | | | |
| 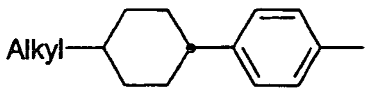 | (9') | 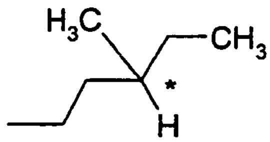 | (i) |
| | | | |
| 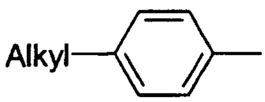 | (17') | 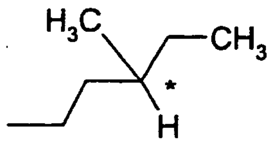 | (i) |
| | | | |
| 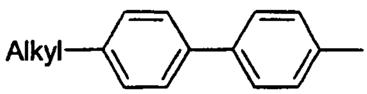 | (19') | 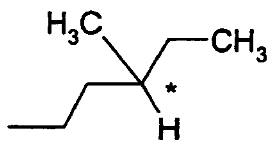 | (i) |
| | | | |

Tabelle fortgesetzt

| $R^1$ | | $Q^1$ | |
|---|---|---|---|
| 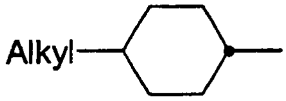 | (5') | 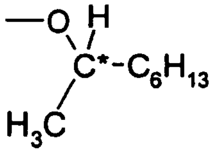 | (m) |
| | | | |
| 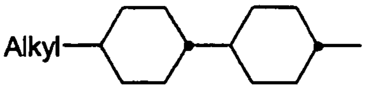 | (7') | 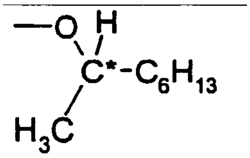 | (m) |
| | | | |
| 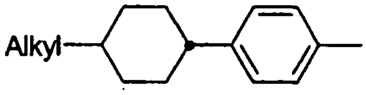 | (9') | 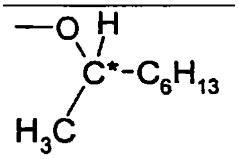 | (m) |
| | | | |
| 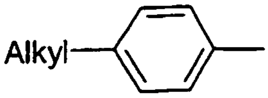 | (17') | 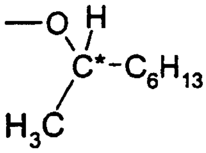 | (m) |
| | | | |
| 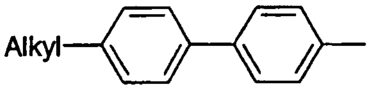 | (19') | 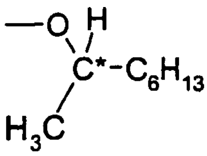 | (m) |
| | | | |
| 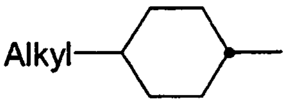 | (5') | 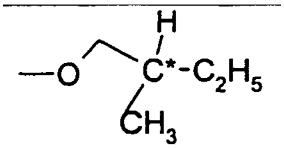 | (r) |
| | | | |
| 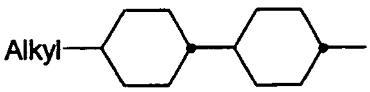 | (7') | 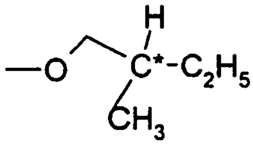 | (r) |
| | | | |

Tabelle fortgesetzt

| $R^1$ | | $Q^1$ | |
|---|---|---|---|
| 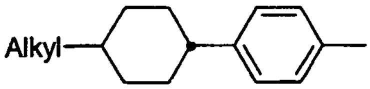 | (9') | 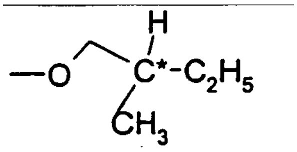 | (r) |
| | | | |
| 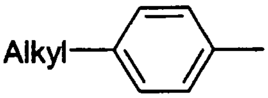 | (17') | 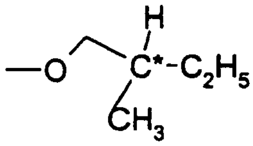 | (r) |
| | | | |
| 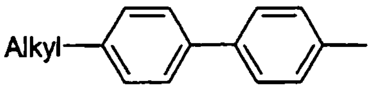 | (19') | 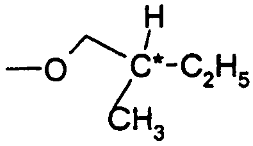 | (r) |
| | | | |
| 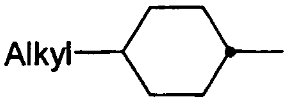 | (5') | 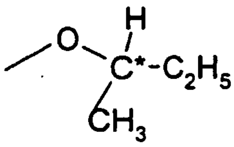 | (s) |
| | | | |
| 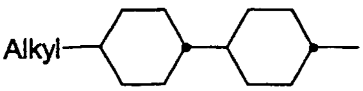 | (7') | 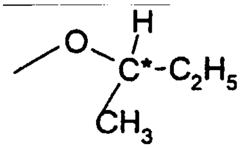 | (s) |
| | | | |
| 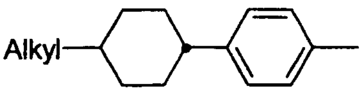 | (9') | 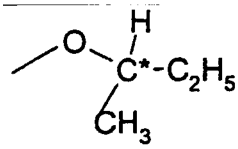 | (s) |
| | | | |
| 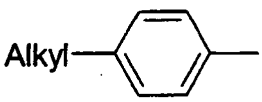 | (17') | 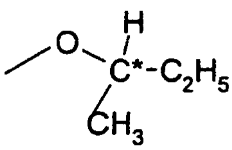 | (s) |
| | | | |
| 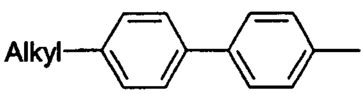 | (19') | 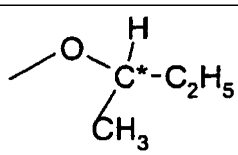 | (s) |

wobei Alkyl ein geradkettiger Alkylrest mit 1 bis 7 C-Atomen bedeutet und demnach Methyl, Ethyl, Propyl, Butyl, Pentyl, Hexyl oder Heptyl, besonders bevorzugt Propyl, ist.

V, W, X, Y in der allgemeinen Formel I kann jeweils unabhängig voneinander ein Alkylrest und/oder ein Alkoxyrest mit 1 bis 12 C-Atomen sein, der geradkettig oder verzweigt sein kann. Vorzugsweise ist er geradkettig, hat 1, 2, 3, 4, 5, 6 oder 7 C-Atome und ist demnach vorzugsweise Methyl, Ethyl, Propyl, Butyl, Pentyl, Hexyl, Heptyl, Methoxy, Ethoxy, Propoxy, Butoxy, Pentoxy, Hexoxy oder Heptoxy.

Die Verbindungen der Formel I werden nach an sich bekannten Methoden hergestellt, wie sie in der Literatur (z.B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen.

Die besonders bevorzugten Verbindungen der Formel (lag), worin Q* die bevorzugte Struktur (m) und R-(A-Z)$_n$- die bevorzugte Struktur (3) ist, werden gemäß Schema 1 hergestellt:

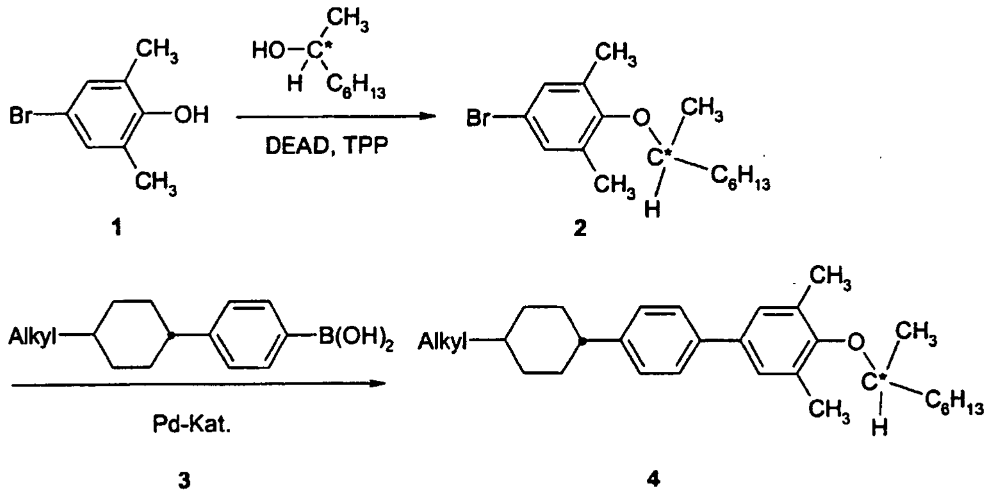


Schema 1

Die besonders bevorzugten Verbindungen der Formel (lab), worin Q* die bevorzugte Struktur (m) und R-(A-Z)$_n$- die bevorzugte Struktur (1) ist, werden gemäß Schema 2 hergestellt:

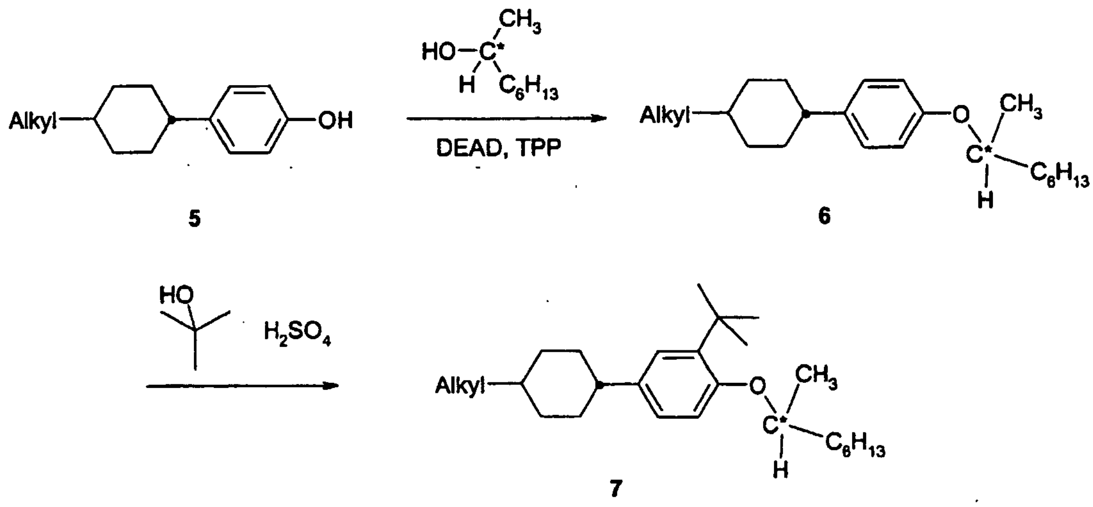


Schema 2

Die Verbindungen der Formel I finden Verwendung als Komponenten flüssigkristalliner Phasen, vorzugsweise nematischer, flüssigkristalliner Phasen, z.B. zur Vermeidung von reverse twist.

Besonders bevorzugt werden die Verbindungen der Formel I als Dotierstoffe für nematische, flüssigkristalline Phasen für STN und Aktivmatrixanzeigen eingesetzt. Hierbei zeichnen sie sich insbesondere durch hohe "helical twisting

power" (HTP) und durch hohe "voltage holding ratios" aus. Insbesondere lassen sich solche dotierten, nematischen Mischungen leicht durch Behandeln mit Aluminiumoxid aufreinigen, wobei kein oder kaum Verlust am chiralen Dotierstoff auftritt.

Des weiteren lassen sich mit Hilfe der erfindungsgemäßen chiralen Derivate flüssigkristalline Medien für sogenannte "phase change" Displays herstellen (z.B. Y. Yabe et al., SID 1991 Digest 261-264).

Ein weiterer Gegenstand der vorliegenden Erfindung ist somit auch die Verwendung der erfindungsgemäßen chiralen Dotierstoffe in flüssigkristallinen Mischungen, vorzugsweise zur Erzeugung einer Verdrillung.

Ebenfalls Gegenstand der vorliegenden Erfindung sind somit flüssigkristalline Mischungen enthaltend mindestens einen erfindungsgemäßen chiralen Dotierstoff der Formel I.

Die erfindungsgemäßen, flüssigkristallinen Mischungen enthalten etwa 0,01 bis 30 Gew.-%, vorzugsweise 0,05 bis 10 Gew.-%, besonders bevorzugt 0,1 bis 10 Gew.-% und insbesondere 0,1 bis 5 Gew.-% einer oder mehrerer Verbindungen der Formel I.

Die wichtigsten als weitere Bestandteile erfindungsgemäßer Medien in Frage kommenden Verbindungen lassen sich durch die Formeln 1, 2, 3, 4 und 5 charakterisieren:

| | |
|---|---|
| R'-L-E-R" | 1 |
| R'-L-COO-E-R" | 2 |
| R'-L-OOC-E-R" | 3 |
| R'-L-$CH_2CH_2$-E-R" | 4 |
| R'-L-C≡C-E-R" | 5 |

In den Formeln 1, 2, 3, 4 und 5 bedeuten L und E, die gleich oder verschieden sein können, jeweils unabhängig voneinander einen bivalenten Rest aus der aus -Phe-, -Cyc-, -Phe-Phe-, -Phe-Cyc-, -Cyc-Cyc-, -Pyr-, -Dio-, -G-Phe- und -G-Cyc- sowie deren Spiegelbilder gebildeten Gruppe, wobei Phe unsubstituiertes oder durch Fluor substituiertes 1,4-Phenylen, Cyc trans-1,4-Cyclohexylen oder 1,4-Cyclohexenylen, Pyr Pyrimidin-2-5-diyl oder Pyridin-2,5-diyl, Dio 1,3-Dioxan-2,5-diyl und G 2-(trans-1,4-Cyclohexyl)-ethyl, bedeuten.

Vorzugsweise ist einer der Reste L und E Cyc, Phe oder Pyr. E ist vorzugsweise Cyc, Phe oder Phe-Cyc. Vorzugsweise enthalten die erfindungsgemäßen Medien eine oder mehrere Komponenten ausgewählt aus den Verbindungen der Formeln 1, 2, 3, 4 und 5, worin L und E ausgewählt sind aus der Gruppe Cyc, Phe und Pyr und gleichzeitig eine oder mehrere Komponenten ausgewählt aus den Verbindungen der Formeln 1, 2, 3, 4 und 5, worin einer der Reste L und E ausgewählt ist aus der Gruppe Cyc, Phe und Pyr und der andere Rest ausgewählt ist aus der Gruppe -Phe-Phe-, -Phe-Cyc-, -Cyc-Cyc-, -G-Phe- und -G-Cyc-, und gegebenenfalls eine oder mehrere Komponenten ausgewählt aus den Verbindungen der Formeln 1, 2, 3, 4 und 5, worin die Reste L und E ausgewählt sind aus der Gruppe -Phe-Cyc-, -Cyc-Cyc-, -G-Phe- und -G-Cyc-.

R' und/oder R" bedeuten jeweils unabhängig voneinander Alkyl, Alkenyl, Alkoxy, Alkoxyalkyl, Alkenyloxy oder Alkanoyloxy mit bis zu 8 C-Atomen, -F, -Cl, -CN, -NCS, $-(O)_iCH_{3-(k+l)}F_kCl_l$, wobei i 0 oder 1, k und e, 0, 1, 2 oder 3 sind und wobei die Summe (k+l) 1, 2 oder 3 ist.

R' und R" bedeuten in einer kleineren Untergruppe der Verbindungen der Formeln 1, 2, 3, 4 und 5 jeweils unabhängig voneinander Alkyl, Alkenyl, Alkoxy, Alkoxyalkyl, Alkenyloxy oder Alkanoyloxy mit bis zu 8 Kohlenstoffatomen. Im folgenden wird diese kleinere Untergruppe Gruppe A genannt und die Verbindungen werden mit den Teilformeln 1 a, 2a, 3a, 4a und 5a bezeichnet. Bei den meisten dieser Verbindungen sind R' und R" voneinander verschieden, wobei einer dieser Reste meist Alkyl, Alkenyl, Alkoxy oder Alkoxyalkyl ist.

In einer anderen als Gruppe B bezeichneten kleineren Untergruppe der Verbindungen der Formeln 1, 2, 3, 4 und 5 bedeutet R" -F, -Cl, -NCS oder $-(O)_i CH_{3-(k+l)} F_kCl_l$, wobei i 0 oder 1, k und l 1, 2 oder 3 sind und wobei die Summe (k+l) 1, 2 oder 3 ist; die Verbindungen, in denen R" diese Bedeutung hat, werden mit den Teilformeln 1 b, 2b, 3b, 4b und 5b bezeichnet. Besonders bevorzugt sind solche Verbindungen der Teilformeln 1 b, 2b, 3b, 4b und 5b, in denen R" die Bedeutung -F, -Cl, -NCS, $-CF_3$, $-OCHF_2$ oder $-OCF_3$ hat.

In den Verbindungen der Teilformeln 1 b, 2b, 3b, 4b und 5b hat R' die bei den Verbindungen der Teilformeln 1a bis 5a angegebene Bedeutung und ist vorzugsweise Alkyl, Alkenyl, Alkoxy oder Alkoxyalkyl.

In einer weiteren kleineren Untergruppe der Verbindungen der Formeln 1, 2, 3, 4 und 5 bedeutet R" -CN; diese Untergruppe wird im folgenden als Gruppe C bezeichnet und die Verbindungen dieser Untergruppe werden entsprechend mit Teilformeln 1 c, 2c, 3c, 4c und 5c beschrieben. In den Verbindungen der Teilformeln 1c, 2c, 3c, 4c und 5c hat R' die bei den Verbindungen der Teilformeln 1a bis 5a angegebene Bedeutung und ist vorzugsweise Alkyl, Alkoxy oder Alkenyl.

Neben den bevorzugten Verbindungen der Gruppen A, B und C sind auch andere Verbindungen der Formeln 1, 2, 3, 4 und 5 mit anderen Varianten der vorgesehenen Substituenten gebräuchlich. Alle diese Substanzen sind nach literaturbekannten Methoden oder in Analogie dazu erhältlich.

Bevorzugt sind flüssigkristalline Mischungen enthaltend mindestens einen erfindungsgemäßen chiralen Dotierstoff der Formel I und mindestens eine flüssigkristalline Verbindung der Formeln 1, 2, 3, 4 und/oder 5.

Besonders bevorzugt enthalten die erfindungsgemäßen Medien neben erfindungsgemäßen Verbindungen der Formel I eine oder mehrere Verbindungen, ausgewählt aus den Gruppen A, B und/oder C.

Die Massenanteile der Verbindungen aus diesen Gruppen an den erfindungsgemäßen Medien sind:

Gruppe A: 0 bis 90 Gew.-%, vorzugsweise 20 bis 90 Gew.-%, besonders bevorzugt 30 bis 90 Gew.-%;
Gruppe B: 0 bis 80 Gew.-%, vorzugsweise 10 bis 80 Gew.-%, besonders bevorzugt 10 bis 65 Gew.-%;
Gruppe C: 0 bis 80 Gew.-%, vorzugsweise 5 bis 80 Gew.-%, besonders bevorzugt 5 bis 50 Gew.-%;

wobei die Summe der Massenanteile der in den jeweiligen erfindungsgemäßen Medien enthaltenen Verbindungen aus den Gruppen A und/oder B und/oder C vorzugsweise 5 bis 90 Gew.-% und besonders bevorzugt 10 bis 90 Gew.-% beträgt.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z. B. in Aceton, Chloroform oder Methanol, zu mischen und das Lösungsmittel nach Durchmischung wieder zu entfernen, beispielsweise durch Destillation. Weiterhin ist es möglich die Mischungen auf andere herkömmliche Arten, z. B. durch Verwendung von Vormischungen, z. B. Homologen-Mischungen oder unter Verwendung von sogenannten "Multi-Bottle"-Systemen herzustellen.

Die Dielektrika können auch weitere, dem Fachmann bekannte und in der Literatur beschriebene Zusätze enthalten. Beispielsweise können 0 bis 15 Gew.-%, vorzugsweise 0 bis 10 Gew.-%, pleochroitische Farbstoffe und/oder chirale Dotierstoffe zugesetzt werden. Die einzelnen zugesetzten Verbindungen werden in Konzentrationen von 0,01 bis 6 Gew.-%, vorzugsweise von 0,1 bis 3 Gew.-% eingesetzt. Dabei werden jedoch die Konzentrationsangaben der übrigen Bestandteile der Flüssigkristallmischungen also der flüssigkristallinen oder mesogenen Verbindungen, ohne Berücksichtigung der Konzentration dieser Zusatzstoffe angegeben.

Gegenstand der vorliegenden Erfindung sind ferner elektrooptische Anzeigeelemente, insbesondere solche Flüssigkristall-, Schalt- und Anzeigevorrichtungen, enthaltend ein flüssigkristallines Medium, Trägerplatten, Elektroden, mindestens eine Orientierungsschicht sowie gegebenenfalls zusätzliche Hilfsschichten, wobei das flüssigkristalline Medium mindestens eine Verbindung der Formel I enthält.

Weiterhin Gegenstand der vorliegenden Erfindung sind elektrooptische Anzeigeelemente mit Aktivmatrixansteuerung, mit nematischen bzw. cholesterischen Phasen, die mindestens eine Verbindung der Formel I enthalten.

In der vorliegenden Anmeldung und insbesondere in den folgenden Beispielen sind die Strukturen der Flüssigkristallverbindungen durch Acronyme angegeben, wobei die Transformation in chemische Formeln gemäß folgender Tabellen A und B erfolgt. Alle Reste $C_nH_{2n+1}$ und $C_mH_{2m+1}$ sind geradkettige Alkylreste mit n bzw. m C-Atomen. Die Codierung gemäß Tabelle B versteht sich von selbst. In Tabelle A ist nur das Acronym für den Grundkörper angegeben. Im Einzelfall folgt getrennt vom Acronym für den Grundkörper mit einem Strich ein Code für die Substituenten $R^1$, $R^2$, $L^1$ und $L^2$:

| Code für $R^1$, $R^2$, $L^1$, $L^2$ | $R^1$ | $R^2$ | $L^1$ | $L^2$ |
|---|---|---|---|---|
| nm | $C_nH_{2n+1}$ | $C_mH_{2m+1}$ | H | H |
| nOm | $C_nH_{2n+1}$ | $OC_mH_{2m+1}$ | H | H |
| nO.m | $OC_nH_{2n+1}$ | $C_mH_{2m+1}$ | H | H |
| n | $C_nH_{2n+1}$ | CN | H | H |
| nN.F | $C_nH_{2n+1}$ | CN | F | H |
| nN.F.F | $C_nH_{2n+1}$ | CN | F | F |
| nF | $C_nH_{2n+1}$ | F | H | H |
| nF.F | $C_nH_{2n+1}$ | F | F | H |
| nF.F.F | $C_nH_{2n+1}$ | F | F | F |
| nOF | $OC_nH_{2n+1}$ | F | H | H |
| nCl | $C_nH_{2n+1}$ | Cl | H | H |
| nCl.F | $C_nH_{2n+1}$ | Cl | F | H |
| nCl.F.F | $C_nH_{2n+1}$ | Cl | F | F |
| $nCF_3$ | $C_nH_{2n+1}$ | $CF_3$ | H | H |
| $nCF_3$.F | $C_nH_{2n+1}$ | $CF_3$ | F | H |
| $nCF_3$.F.F | $C_nH_{2n+1}$ | $CF_3$ | F | F |
| $nOCF_3$ | $C_nH_{2n+1}$ | $OCF_3$ | H | H |

Tabelle fortgesetzt

| Code für $R^1$, $R^2$, $L^1$, $L^2$ | $R^1$ | $R^2$ | $L^1$ | $L^2$ |
|---|---|---|---|---|
| $nOCF_3.F$ | $C_nH_{2n+1}$ | $OCF_3$ | F | H |
| $nOCF_3.F.F$ | $C_nH_{2n+1}$ | $OCF_3$ | F | F |
| $nOCF_2$ | $C_nH_{2n+1}$ | $OCHF_2$ | H | H |
| $nOCF_2.F$ | $C_nH_{2n+1}$ | $OCHF_2$ | F | H |
| $nOCF_2.F.F$ | $C_nH_{2n+1}$ | $OCHF_2$ | F | F |
| nS | $C_nH_{2n+1}$ | NCS | H | H |
| nS.F | $C_nH_{2n+1}$ | NCS | F | H |
| nS.F.F | $C_nH_{2n+1}$ | NCS | F | F |
| rVsN | $C_rH_{2r+1}-CH=CH-C_sH_{2s}$ | CN | H | H |
| rEsN | $C_rH_{2r+1}-O-C_sH_{2s}$ | CN | H | H |
| nAm | $C_nH_{2n+1}$ | $COOC_mH_{2m+1}$ | H | H |

**Tabelle A:**

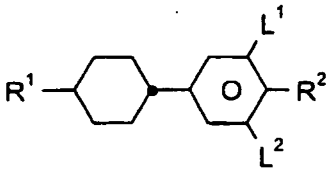

**PCH**

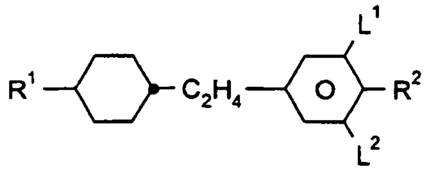

**EPCH**

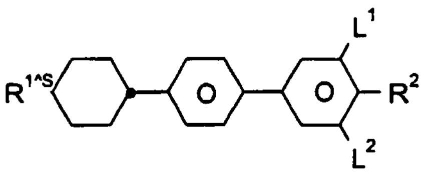

**BCH**

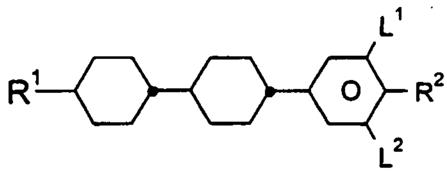

**CCP**

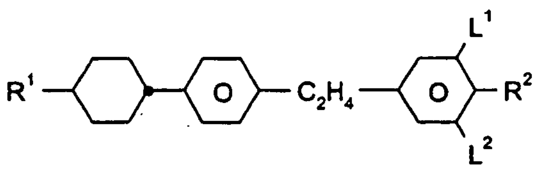

**EBCH**

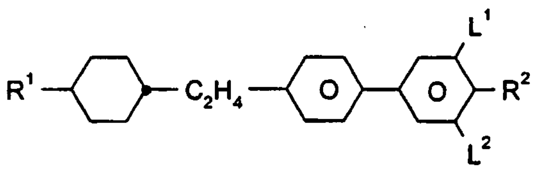

**BECH**

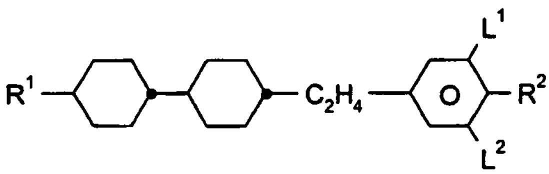

**ECCP**

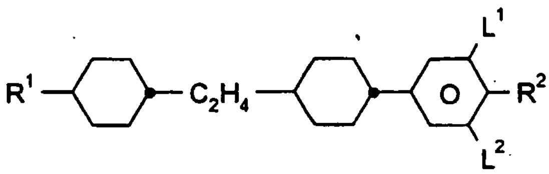

**CECP**

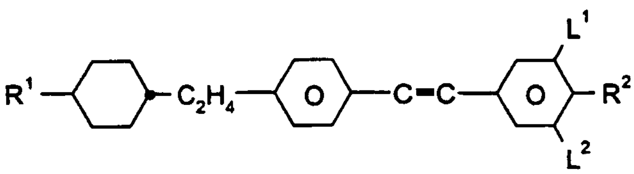

**CEPTP**

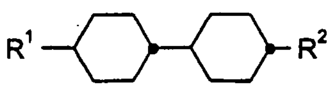

**CCH**

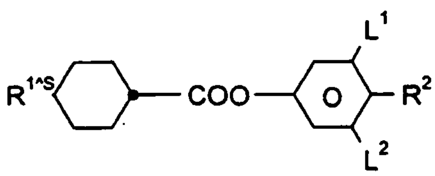

**D**

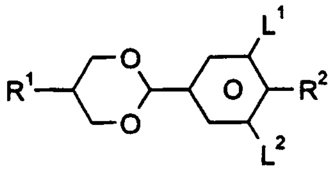

**PDX**

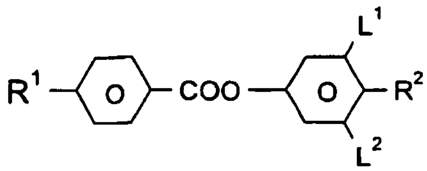

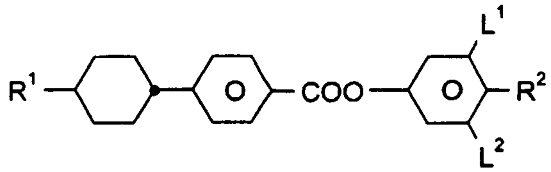

**ME** **HP**

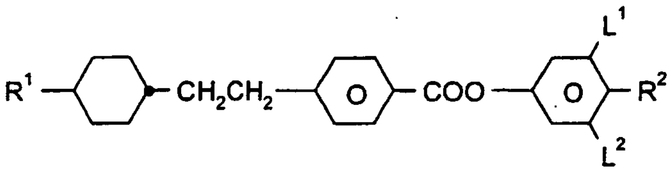

**EHP**

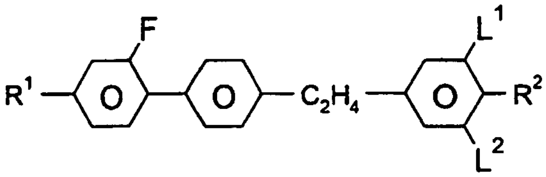

**FET**

**Tabelle B:**

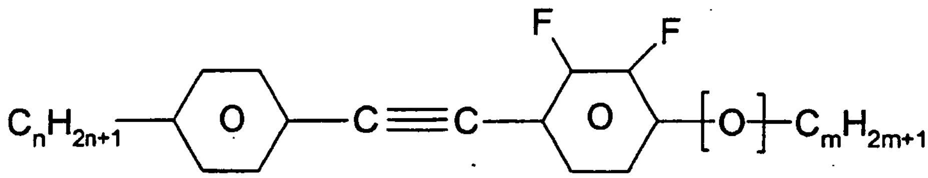

**PTP-n[O]mFF**

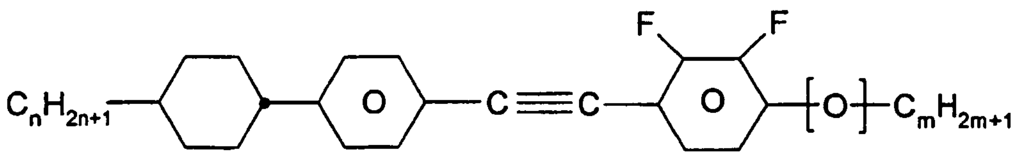

**CPTP-n[O]mFF**

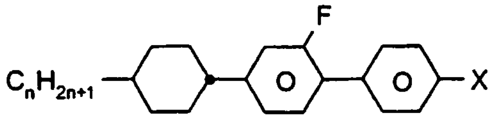

**CGP-n-X**
(X = F, Cl, OCF3)

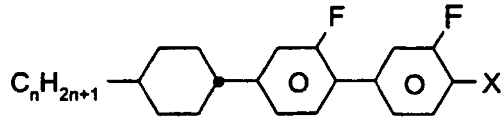

**CGG-n-X**
(X = F, Cl, OCF3)

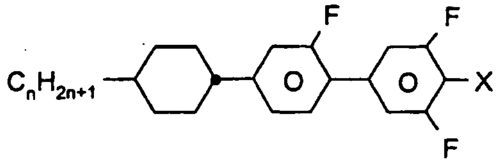

**CGU-n-X**
(X = F, Cl, OCF3)

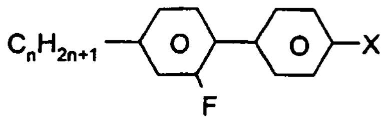

**GP-n-X**
(X = F, Cl, OCF3)

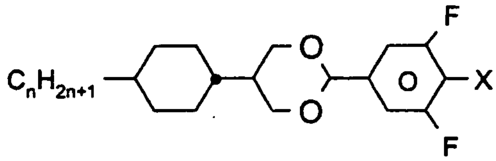

**CDU-n-X**
(X = F, Cl, OCF3)

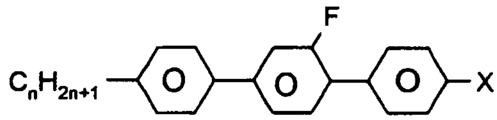

**PGP-n-X**
(X = F, Cl, OCF3)

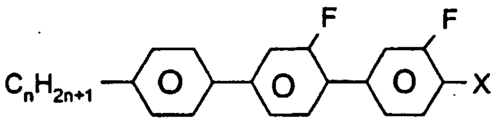

**PGG-n-X**
(X = F, Cl, OCF3)

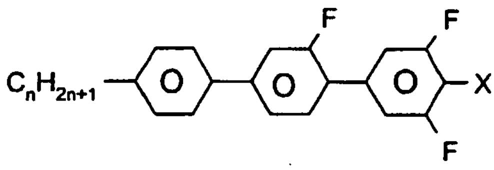

**PGU-n-X**
(X = F, Cl, OCF3)

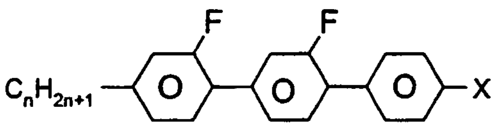

**GGP-n-X**
(X = F, Cl, OCF3)

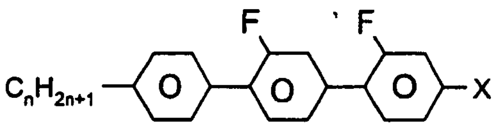

**PGIGI-n-X**
(X = F, Cl, OCF3)

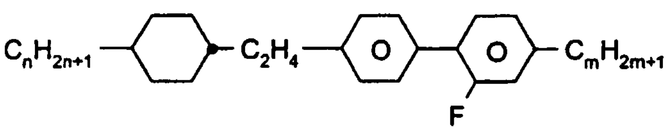

**I-nm**

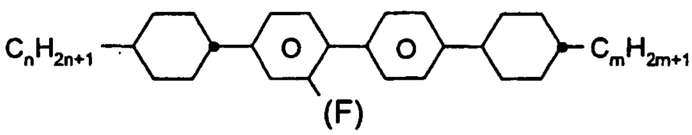

**CBC-nm(F)**

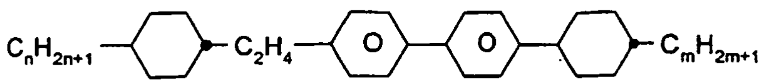

**ECBC-nm**

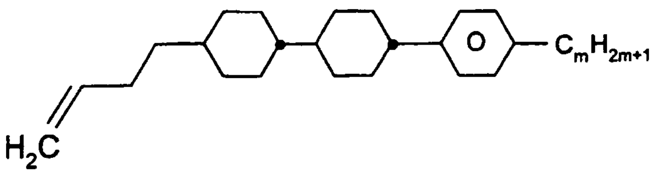

**CCP-V2-m**

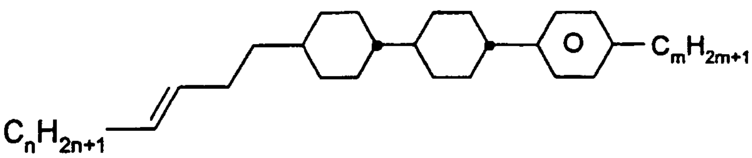

**CCP-nV2-m**

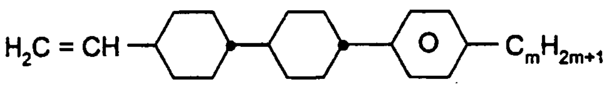

**CCP-V-m**

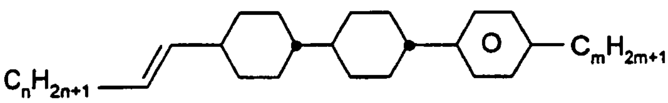

**CCP-nV-m**

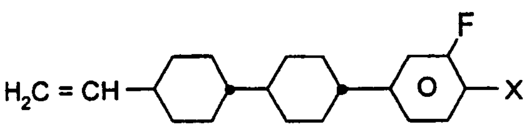

**CCG-V-X**

(X = F, Cl, OCF3)

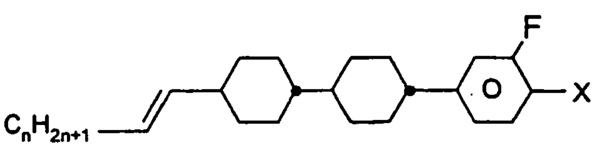

**CCG-nV-X** (X = F, Cl, OCF3)

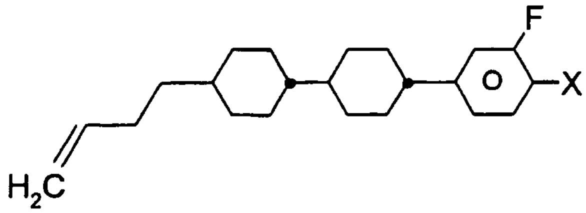

**CCG-V2-X**

(X = F, Cl, OCF3)

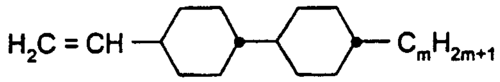

**CC-V-m**

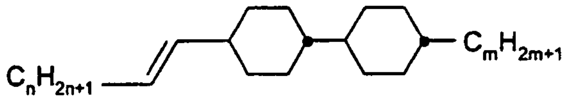

**CC-nV-m**

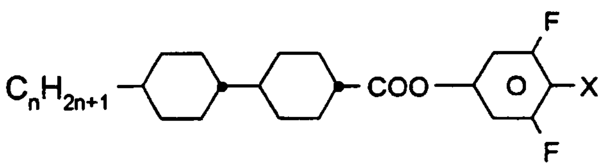

**CCZU-n-X**

(X = F, Cl, OCF3)

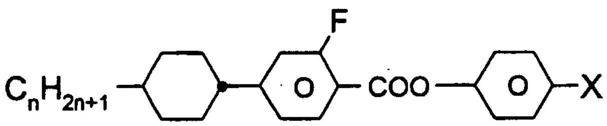

**CGZP-n-X**

(X = F, Cl, OCF3)

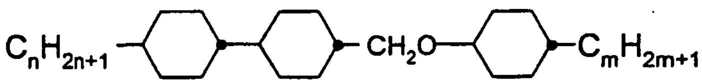

**CCOC-n-m**

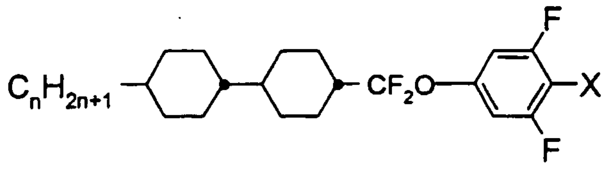

**CCQU-n-X**

(X = F, Cl, OCF3)

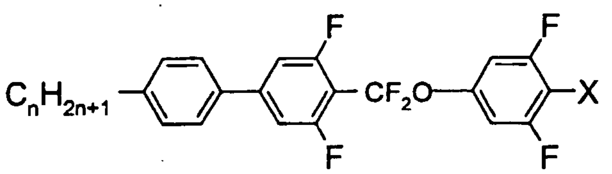

**PUQU-n-X**

(X = F, Cl, OCF3)

Die Erfindung wird im folgenden anhand von Ausführungsbeispielen näher erläutert, ohne dadurch jedoch in irgendeiner Weise eingeschränkt zu werden.

Beispiel 1

5,0 g (24,9 mmol) 4-Brom-2,6-dimethylphenol 1, 5,0 ml 2-Octanol (31,5 mmol) und 8,0 g Triphenylphosphin (TPP) (30,5 mmol) werden bei Raumtemperatur unter Rühren in 200 ml Tetrahydrofuran (THF) gelöst (Gelbfärbung). Anschließend werden 6,0 ml (30,9 mmol) Diisopropylazodicarboxylat (DEAD) zugetropft. Aufgrund der exothermen Reaktion steigt die Temperatur auf 35°C an. Um zu einem vollständigen Umsatz zu gelangen, werden 2 Stunden nachgerührt. Der Ansatz wird vollständig einrotiert und das erhaltene Rohprodukt mit 1-Chlorbutan über 1 l Kieselgel eluiert. Es wird das Produkt 2 erhalten.

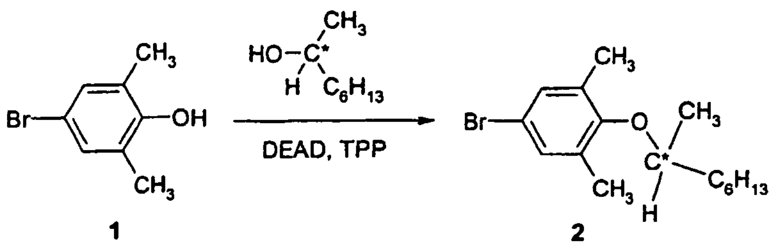


**1** **2**

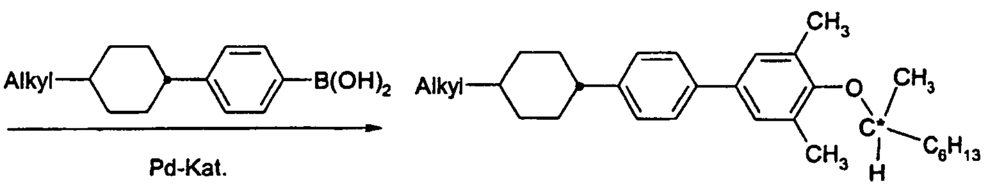


**3** **4**

7,1 g des Produktes **2** (22,7 mmol), 6,0 g der Verbindung **3** (24,4 mmol), 0,020 g Palladium-(II)-acetat (47% Pd) (0,089 mmol), 0,06 g Triphenylphosphin (0,229 mmol), 50 ml Propanol, 15,0 ml 2N-NatriumcarbonatLösung und 10 ml Wasser werden zusammengegeben und über Nacht bei 80°C unter Rückfluß gekocht. Anschließend wird das Reaktionsgemisch mit Wasser verdünnt, MTB-Ether (tert.-Butylmethylether) zugesetzt und die organische Phase abgetrennt. Die wässrige Phase wird zweimal mit MTB-Ether extrahiert. Die vereinigten organischen Phasen werden mit Wasser und mit $NH_4Cl$-Lösung gewaschen, getrocknet, abgesaugt und eingeengt. Man erhält 10,6 g eines schwarzen Öls, das mit 1-Chlorbutan über 1 l Kieselgel eluiert wird. Daraus resultiert 10 g eines klaren Öls, das mit 1-Chlorbutan/Heptan über 3 l Kieselgel eluiert wird. Man erhält eine viskose, klare Flüssigkeit, die aus 1:25 i-Propanol bei -5°C umkristallisiert wird. Daraus resultiert Produkt **4** als eine hoch viskose Flüssigkeit.

Beispiel 2

20,0 g des Produktes **5** (91,6 mmol), 15,28 ml 2-Octanol (96,18 mmol) und 25,23 g Triphenylphosphin (96,18 mmol) werden bei Raumtemperatur unter Rühren und Stickstoffatmosphäre in 220 ml Tetrahydrofuran (THF) gelöst (Gelbfärbung). Anschließend werden 19,45 g Diisopropylazodicarboxylat (DEAD) (96,18 mmol) zugetropft. Aufgrund der exothermen Reaktion steigt die Temperatur auf 51 °C an. Um zu einem möglichst vollständigen Umsatz zu gelangen, wird der Ansatz über Nacht bei Raumtemperatur nachgerührt. Danach wird der Ansatz vollständig einrotiert und das erhaltene Rohprodukt mit Heptan/Dichlormethan (1:1) über 2 l Kieselgel eluiert. Es wird das Produkt **6** erhalten.

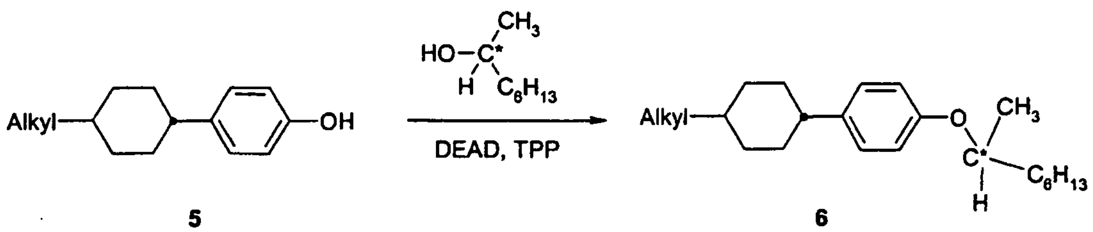


**5** **6**

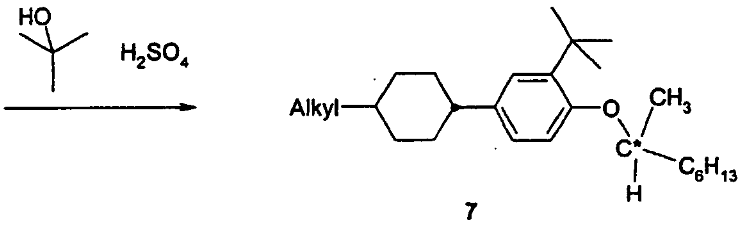


**7**

5,0 g des Produktes **6** (15,04 mmol) werden in 2,86 g tert.-Butanol (30,07 mmol) gelöst und unter intensivem Rühren in 9,62 ml 95 bis 97%ige Schwefelsäure (180,42 mmol) eingerührt. Nach 30 Minuten Rühren wird das Reaktionsgemisch mit viel Wasser versetzt und zweimal mit MTB-Ether extrahiert. Die vereinigten organischen Phasen werden mit Wasser gewaschen, über Natriumsulfat getrocknet, filtriert und einrotiert. Man erhält das Rohprodukt, das zweimal mit Heptan über 1 l Kieselgel eluiert wird. Daraus resultiert das Produkt **7.**

Beispiel 3

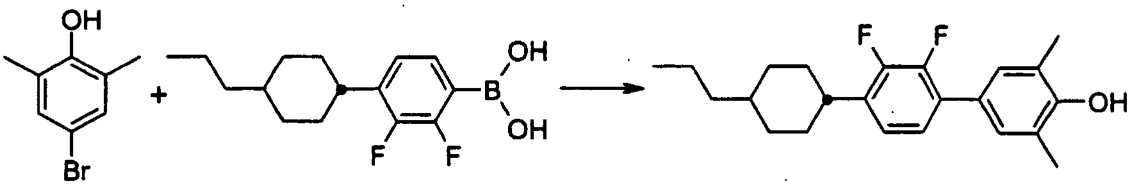

**8** **9** **10**

10,104 g 4-Brom-2,6-dimethylphenol **8** (50,0 mmol), 17,211 g des Produktes **9** (61,0 mmol), 100,51 ml 1,4-Dioxan, 1,513 g Bis(tricyclohexylphosphanyl)-Pd-(II)-chlorid (2,05 mmol) und 30,161 g tri-Kaliumphosphat-Trihydrat

(113,25 mmol) werden zusammen gegeben und über Nacht bei 80°C bis zum vollständigen Umsatz gerührt. Anschließend wird das Reaktionsgemisch auf Raumtemperatur abgekühlt, mit Wasser versetzt, mit halb konz. HCl sauergestellt und mit MTB-Ether extrahiert. Die grüne Suspension wird über Celite® abgesaugt und die Phasen getrennt. Die wässrige Phase wird 2x mit MTB-Ether extrahiert und die vereinigten organischen Phasen 1x mit Wasser und 1x mit gesättigter NaCl-Lösung gewaschen, über Natriumsulfat getrocknet, abgesaugt und eingeengt. Man erhält 24 g eines dunkelgrünlichbraunen schmierigen Rückstandes, der mit 1-Chlorbutan über 0,7 l Kieselgel eluiert wird. Man erhält 10 g einer gelblichbraunen, kristallinen Masse, die aus der vierfachen Menge Methanol bei -15°C umkristallisiert wird. Daraus resultieren leicht violettgefärbte Kristalle der Verbindung **10.**

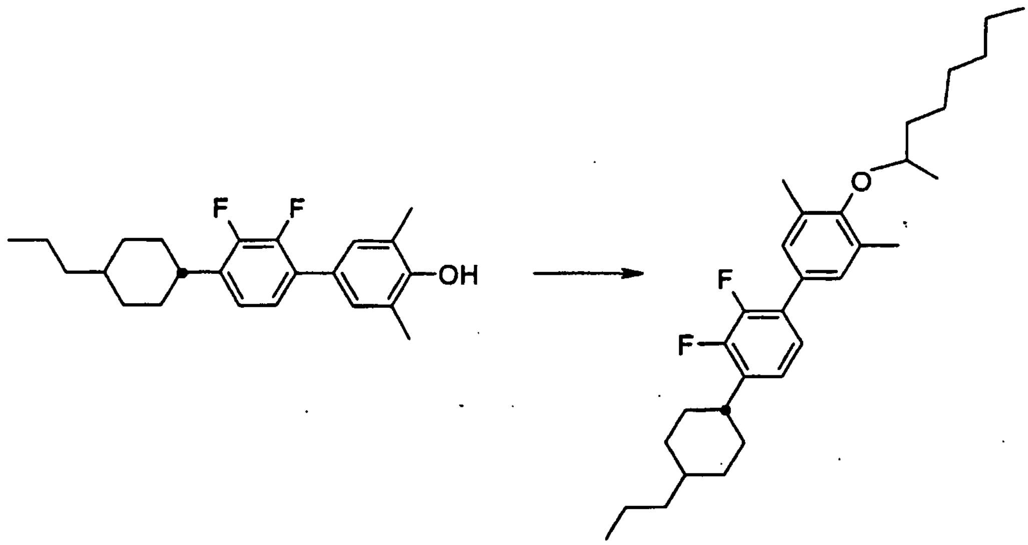

**10** **11**

2,168 g der Verbindung **10** (6,0 mmol), 1,206 ml 2-Octanol (7,596 mmol), 1,936 g Triphenylphosphin (7,38 mmol) und 20 ml Tetrahydrofuran (THF) werden unter Rühren und Stickstoffatmosphäre bei Raumtemperatur gelöst (Gelbfärbung), anschließend werden 1,447 ml Diisopropylazodicarboxylat (7,44 mmol) zugetropft. Aufgrund der exothermen Reaktion steigt die Temperatur auf 35°C an. Um zu einem vollständigen Umsatz zu gelangen, wird der Ansatz 2 Stunden nachgerührt. Anschließend wird der Ansatz komplett einrotiert. Man erhält 7,0 g eines gelblich viskosen, fast klaren Rückstandes, der mit 1-Chlorbutan über 1-l-Kieselgel eluiert wird. Man erhält 1,9 g einer farblosen, klaren und zähen Flüssigkeit, die erneut mit 1-Chlorbutan über Kieselgel eluiert wird. Daraus resultiert das Produkt **11.**

Beispiel 4

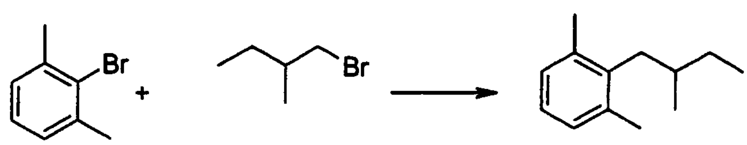

**12** **13** **14**

4,11 g Magnesium-Späne (169,044 mmol) werden in 70 ml THF vorgelegt, zum Rückfluss erhitzt und eine Lösung aus 18,6 g 1-Brom-2-Methylbutan **13** (121,907 mmol) in 150 ml THF so zugetropft, dass die Mischung ständig am Rückfluss kocht (ohne Heizbad). Anschließend wird 1 Stunde unter Rückfluss nachgerührt, auf 17°C abgekühlt (es entsteht dabei eine milchiggraue Suspension), 27,451 g Zinkbromid in 120 ml THF bis ca. 37°C zugetropft, wobei sich

am Kolbenrand zeitweise ein weißer, kristalliner Brei bildet, anschließend 2,087 g Palladium-bis(diphenylphosphino) ferrocen (2,844 mmol) zugegeben (Lilafärbung) und 16,0 g 1-Brom-2,6-dimethylbenzol **12** (81,271 mmol) in 120 ml THF zugetropft, wobei sich das Reaktionsgemisch bräunlich verfärbt und wobei die Temperatur allmählich bis auf 37°C ansteigt und das Reaktionsgemisch mit Heizbad unter Rückfluss gekocht wird. Die Suspension wird über Nacht (22 Stunden) unter Rückfluss gerührt.

Nach 24 Stunden werden 2,2 g Tricyclohexylphosphin-Pd-(II)-chlorid als 3,5 mol-%ige Lösung in THF zugegeben. Es wird über Nacht unter Rückfluss gekocht.

Nach weiteren 24 Stunden wird nochmals die gleiche Menge an Tricyclohexylphosphin-Pd-(II)-chlorid zugegeben.

Nach insgesamt 68 Stunden unter Rückfluss kochen wird das Reaktionsgemisch abkühlen lassen, mit ca. 400 ml Wasser versetzt und mit ca. 6 x 250 ml Pentan extrahiert. Die Phasen lassen sich schwer abtrennen, da sich eine schwarze Zwischenphase bildet. Die organische Phase ist grünlich/grau/ocker mit schwarzen Anteilen.

Die Pentanphase wird mit Natriumsulfat getrocknet und es werden 2 Löffel Kieselgel zugegeben, was beim anschließenden Filtrieren mit Kieselgel/Pentan das heftige Stoßen auf der Fritte verhindert.

Die dunkle Pentanphase wird mit dem Natriumsulfat über eine 1 l Fritte mit einer ca. 6 cm dicken Schicht Kieselgel filtriert. Es wird mit 1 Liter Pentan nachgewaschen. Die gesamte, gelbe Pentanlösung wird unter Normaldruck mit Kolonne destilliert.

Als Rückstand aus der Destillation wird 40 g einer gelblich orangen Flüssigkeit mit einem gelben Niederschlag erhalten. Dieser Rückstand wird über Kieselgel/Pentan eluiert. 1,5 Liter der Pentanlösung werden bei Normaldruck abdestilliert und anschließend im Vakuum destilliert.

Das Produkt **14** wird bei der Vakuumdestillation als fast farbloses, leicht gelbliches Destillat erhalten (Kp: 92 bis 94°C, Bad: 110 bis 130°C, 5,3 mbar).

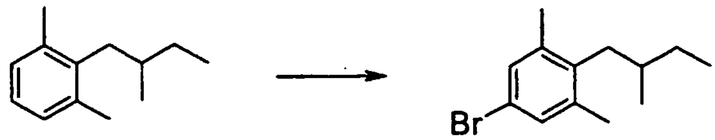

**14** **15**

8,4 g des Produktes **14** (45,311 mmol) werden in 50 ml Dichlormethan vorgelegt, wobei eine orangegelbliche, klare Lösung entsteht, und mit 10,213 g Silbertrifluoracetat (45,311 mmol) versetzt. Dabei verfärbt sich das Reaktionsgemisch hellgelb und eine leicht endotherme Reaktion ist zu beobachten. Zu der gelbweißlichen Suspension werden innerhalb von einer halben Stunde 2,321 ml Brom (45,311 mmol) in 20 ml Dichlormethan so zugetropft, dass die Temperatur 30°C nicht übersteigt (Entfärbung, grauweißliche Suspension). Die Temperatur steigt auf 29°C an. Das Reaktionsgemisch ist eine leicht gelblich gefärbte Suspension.

Nach 3 Stunden Nachrühren wird das AgBr abfiltriert und mit $CH_2Cl_2$ nachgewaschen. Die Dichlormethanphase wird mit Wasser neutralgewaschen, mit $Na_2SO_4$ getrocknet und zum Rückstand eingeengt. Nach Destillation im Kugelrohr (155°C, 1 mbar) wird das Produkt 15 als fast farblose Flüssigkeit erhalten.

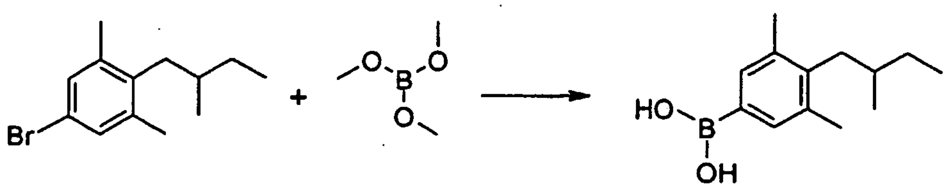

**15** **16** **17**

1,097 g Magnesium-Späne (45,1 mmol) werden unter Stickstoff vorgelegt, mit 10 ml THF überstellt und anschließend zum Rückfluss erhitzt. Mit 4 bis 5 Tropfen des Produkts **15** wird die Reaktion gestartet, der Rest der 10,4 g des Produkts **15** (0,041 mol) wird in 30 ml THF gelöst und unter leichtem Rühren so zugetropft, dass das Reaktionsgemisch ständig am Rückfluss kocht. Hierbei verfärbt sich das Reaktionsgemisch braun. Nach dem alles zugetropft ist,

wird 2 Stunden unter Rückfluss nachgerührt. Nun wird das Ganze auf 10°C abgekühlt und 5,039 ml Trimethylborat **16** (45,1 mmol) zugetropft, wobei sich eine braune, glasartige Suspension bildet, die sich schwer durchrühren lässt. Die Temperatur wird hierbei zwischen 10 und 20°C gehalten. Anschließend wird noch 30 Minuten bei dieser Temperatur nachgerührt. Nun werden vorsichtig 30 ml Wasser zugetropft, es bildet sich ein weißer Niederschlag und die Temperatur steigt bis auf 27°C. Es werden noch 80 ml MTB-Ether zugegeben, dann wird das Reaktionsgemisch mit 50 ml halb konz. Salzsäure angesäuert (exotherm bis 29°C) und solange nachgerührt, bis das überschüssige Magnesium in Lösung gegangen ist. Beim Ansäuern geht der Niederschlag in Lösung und es bildet sich eine hellgelbe Lösung. Die wässrige Phase wird abgetrennt und 2x mit MTB-Ether extrahiert. Die vereinigten organischen Phasen werden 1x mit Wasser gewaschen, über Natriumsulfat getrocknet, abgesaugt und einrotiert. Daraus resultiert das Produkt **17** als gelbe, klare Flüssigkeit.

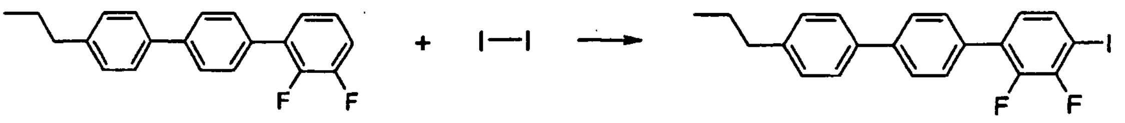

**18** **19**

30,0 g des Produktes **18** (0,097 mol) und 100 ml THF werden bei Raumtemperatur vereinigt und auf -70°C abgekühlt. Nun werden 65,689 ml einer 15%igen Butyllithium-Lösung in n-Hexan (107,67 mmol) bei dieser Temperatur zu der entstandenen weißen Suspension unter Rühren zugetropft und anschließend noch ca. 1 Stunde bei -70°C nachgerührt. Anschließend werden 27,082 g Jod (0,107 mol) gelöst in 50 ml THF bei -70°C zu der lila Lösung zugetropft. Dann wird die Temperatur auf -30°C kommen lassen und Wasser zügig zugetropft. Der Jodüberschuss wird mit einer Natriumhydrogensulfit-Lösung egalisiert. Nun werden die Phasen getrennt, die wässrige Phase wird 2x mit MTB-Ether extrahiert und die vereinigten organischen Phasen 1x mit Wasser und 1x mit gesättigter NaCl-Lösung gewaschen. Die vereinigten organischen Phasen werden über $Na_2SO_4$ getrocknet, abgesaugt und eingeengt. Es wird das Produkt **19** als bräunlich, kristalliner Rückstand erhalten, der aus Heptan umkristallisiert wird.

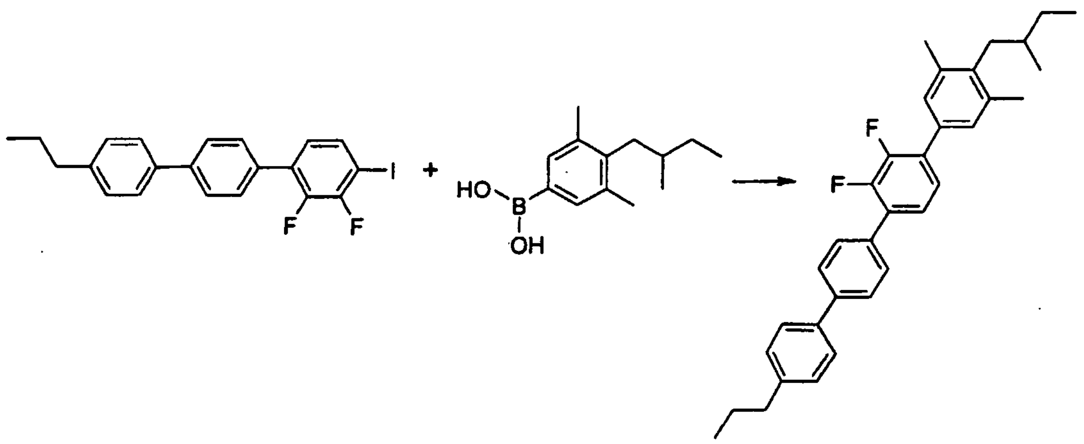

**19** **17** **20**

12,085 g des Produktes **19** (27,8 mmol), 8,5 g der Verbindung **17** (33,981 mmol), 150 ml Dioxan, 0,821 g Bis (tricyclophosphanyl)-Pd-(II)-chlorid (1,112 mmol) und 16,733 g tri-Kaliumphosphat-Trihydrat (62,828 mmol) werden zusammen gegeben und über Nacht bei 80°C bis zum vollständigen Umsatz gerührt. Nun wird das Reaktionsgemisch auf Raumtemperatur abgekühlt, mit Wasser versetzt, mit halb konz. HCl sauergestellt und mit MTB-Ether extrahiert. Die grüne Suspension wird über Celite® abgesaugt und die Phasen getrennt. Die wässrige Phase wird 2x mit MTB-Ether extrahiert und die vereinigten organischen Phasen 2x mit Wasser und gesättigter NaCl-Lösung gewaschen, über Natriumsulfat getrocknet, abgesaugt und eingeengt. Man erhält 16,0 g einer dunkelorange-braunen, viskosen Masse, die über Kieselgel/Heptan eluiert wird. Daraus resultiert 6,0 g einer gelben, klaren Lösung, die über eine kleine Menge Kieselgel/Heptan eluiert wird. Daraus resultiert eine fast farblose, leicht gelblich verfärbte, smektische Masse der Ver-

bindung **20.**

Beispiel 5

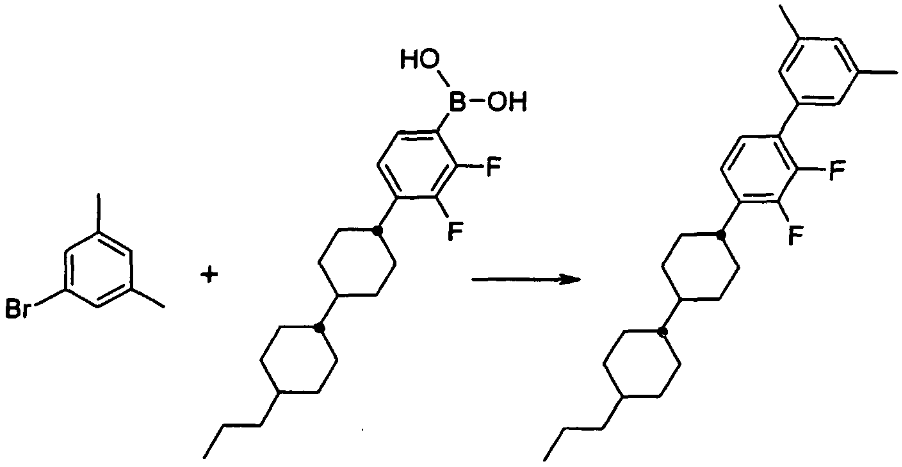

**21** **22** **23**

7,419 g Natriummetaboratoctahydrat (26,64 mmol) werden in 12,6 ml Wasser vorgelegt, 0,623 g Bis(triphenylphosphin)-Pd-(II)-chlorid (0,888 mmol), 0,043 ml Hydraziniumhydroxid (0,888 mmol) und 4,928 ml 5-Bromm-xylol **21** (35,52 mmol) sowie 30 ml THF zugegeben und 5 Minuten gerührt, nun 14,393 g des Produktes **22** (39,512 mmol), gelöst in 100 ml THF, zugegeben auf Siedetemperatur (65°C) erhitzt und über Nacht bis zum vollständigen Umsatz refluxiert. Das Reaktionsgemisch wird dann abgekühlt, mit Wasser und MTB-Ether versetzt und die Phasen getrennt. Die wässrige Phase wird 2x mit MTB-Ether extrahiert und die vereinigten organischen Phasen 3x mit Wasser gewaschen, über Natriumsulfat getrocknet, abgesaugt und eingeengt. Das resultierende Rohprodukt wird mit Pentan über 1,2 l Kieselgel eluiert, die entsprechenden Fraktionen werden vereinigt und einrotiert. Es wird das Produkt **23** als weiße, kristalline Masse erhalten, die aus der 12fachen Menge i-Propanol bei +4°C umkristallisiert wird.

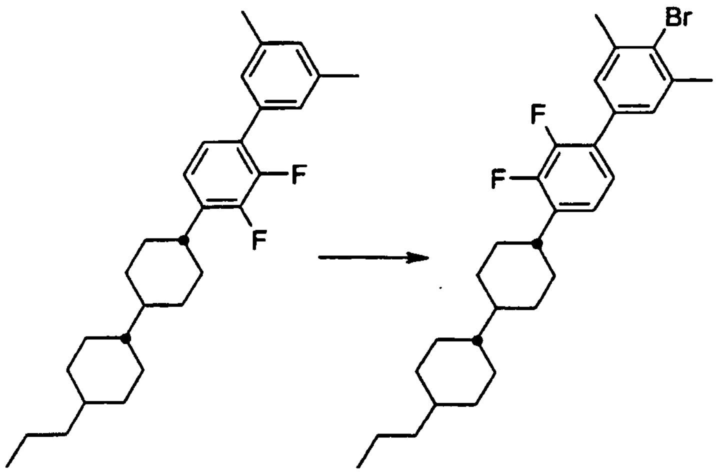

**23** **24**

12,6 g des Produktes **23** (29,674 mmol) werden in 30 ml Dichlormethan vorgelegt (farblose klare Lösung) und

mit 6,688 g Silbertrifluoracetat (29,674 mmol) versetzt (leicht endotherme Reaktion). Zu der weißlichen Suspension werden innerhalb von einer halben Stunde 1,52 ml Brom (29,674 mmol) in 10 ml Dichlormethan so zugetropft, dass die Temperatur 40°C nicht übersteigt (Entfärbung). Die Temperatur steigt auf 34°C an. Das Reaktionsgemisch ist nunmehr eine leicht gelblich gefärbte Suspension. Nach 3 Stunden Nachrühren wird das AgBr absitzen lassen und am nächsten Tag abfiltriert und mit $CH_2Cl_2$ nachgewaschen. Die Lösung wird dann zum Rückstand eingeengt. Die resultierende weiße, kristalline Masse wird versucht in 200 ml Pentan zu lösen. Die unlöslichen Kristalle werden abfiltriert, mit Pentan gewaschen und anschließend aus Pentan bei 5°C umkristallisiert. Anschließend wird das Produkt zunächst mit 50°C warmem Heptan und dann mit Pentan über Kieselgel eluiert. Das resultierende Produkt **24** wird aus Pentan umkristallisiert.

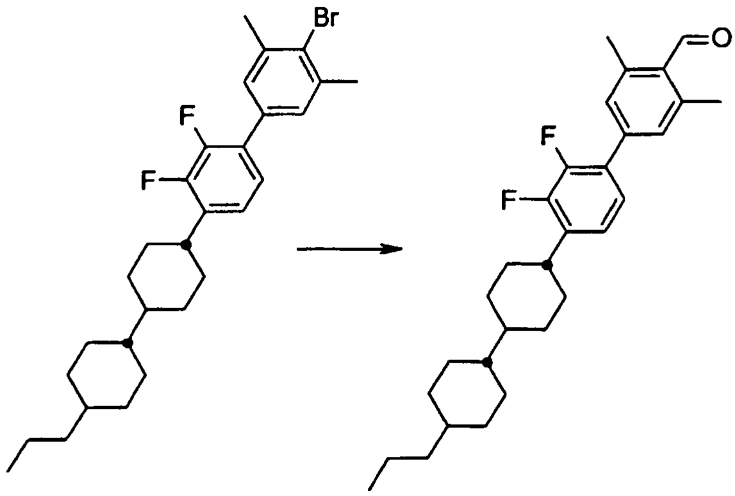

**24** **25**

3,031 g des Produktes **24** (5,839 mmol) werden in 50 ml Diethylether vorgelegt. Bei 0°C werden 4,007 ml einer 15 %igen Butyllithium-Lösung in Hexan (6,38 mmol) zugetropft. Bei dieser Temperatur wird 1 Stunde nachgerührt und dann 0,708 ml N-Formylpiperidin (6,38 mmol) zugetropft. Erneut wird 1 Stunde nachgerührt. Dann wird über Nacht bei Raumtemperatur rühren lassen. Anschließend wird Wasser schnell zugegeben und mit MTB-Ether extrahiert. Das erhaltene Produkt **25** wird über Kieselgel/Chlorbutan eluiert und aus Heptan 1:10 umkristallisiert.

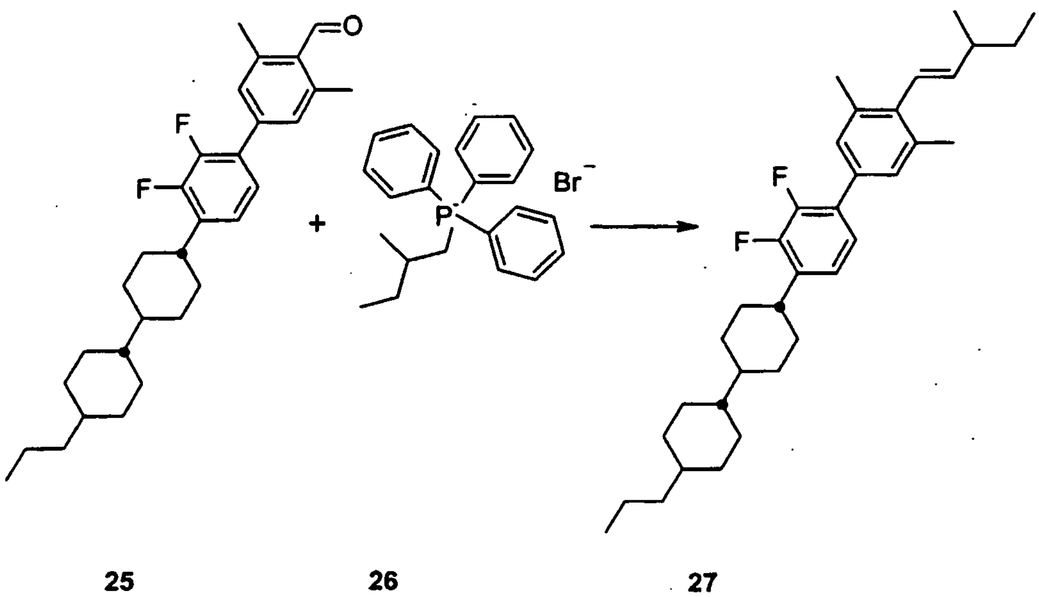

**25** **26** **27**

1,401 g des Produktes **26** (3,39 mmol) werden in 20 ml THF suspendiert (weiß) und auf 0 bis 5°C abgekühlt. Bei dieser Temperatur werden 2,966 ml einer 2-molaren Lösung von Lithiumdiisopropylamid in Cyclohexan/Ethylbenzol/THF (3,6 mmol) zugetropft, wobei die Farbe allmählich nach gelborange umschlägt. Anschließend wird die Lösung von 1,5 g des Produktes **25** (0,003 mol) in 20 ml THF bei 0 bis 5°C dazugetropft und dann die Temperatur bis auf Raumtemperatur kommen lassen. Nach 2 Stunden Nachrührzeit wird das Reaktionsgemisch mit Wasser und halb konz. HCl versetzt (leicht exotherm), mit MTB-Ether extrahiert und die Phasen werden getrennt. Nun wird die wässrige Phase 2x mit MTB-Ether extrahiert und die vereinigten organischen Phasen 1x mit Wasser und 1x mit gesättigter NaCl-Lösung gewaschen, über Natriumsulfat getrocknet, abgesaugt und eingeengt. Es resultiert das Produkt **27** als gelber, kristalliner Rückstand, der mit Heptan über Kieselgel eluiert wird.

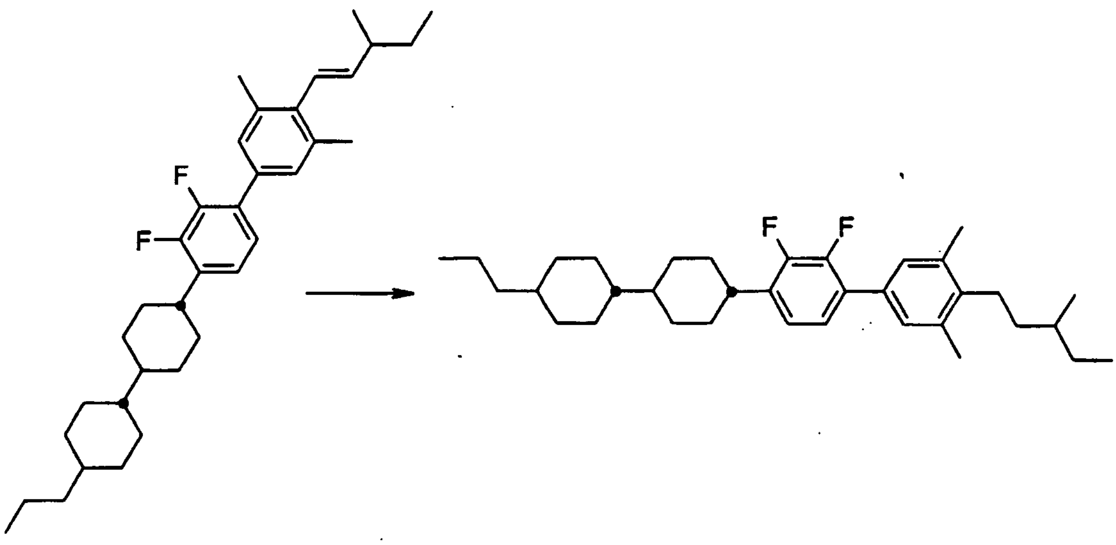

**27** **28**

1,10 g des Produktes **27** (2,088 mmol) werden in 50 ml THF vorgelegt und mit 1,0 g eines Pd-C-Katalysators und 46,7 ml Wasserstoff bis zum Stillstand hydriert. Es bildet sich das Produkt 28 als kristalliner Rückstand, der mit Pentan über Kieselgel eluiert und anschließend aus der 10-fachen Menge i-Propanol umkristallisiert wird.

Beispiel 6

Zu einer flüssigkristallinen Basismischung der folgenden Zusammensetzung:

| | |
|---|---|
| PCH-5F | 10,0 |
| PCH-6F | 8,0 |
| PCH-7F | 6,0 |
| CCP-2OCF3 | 8,0 |
| CCP-3OCF3 | 12,0 |
| CCP-4OCF3 | 7,0 |
| CCP-5OCF3 | 11,0 |
| BCH-3F.F | 12,0 |
| BCH-5F.F | 10,0 |
| ECCP-3OCF3 | 5,0 |
| ECCP-5OCF3 | 5,0 |
| CBC-33F | 2,0 |
| CBC-52F | 2,0 |
| CBC-55F | 2,0 |

wird 1,0 Gew.-% des Produktes **4** des Beispiels 1 hinzugegeben und die Drehkraft HTP der Zusammensetzung bei 20°C bestimmt. Sie weist eine Drehkraft HTP von -15,4 auf.

Im Vergleich dazu liefert die entsprechende Verbindung, die anstelle der beiden Methylgruppen mit Fluoratomen substituiert ist, lediglich eine Drehkraft HTP von -9,37 auf.

Beispiel 7

Zu der flüssigkristallinen Basismischung des Beispiels 6 wird 1,0 Gew.-% des Produktes 7 des Beispiels 2 hinzugegeben und die Drehkraft HTP der Zusammensetzung bei 20°C bestimmt. Sie weist eine Drehkraft HTP von -7,2 auf.

Im Vergleich dazu liefert die entsprechende Verbindung, die anstelle der tert.-Butylgruppe unsubstituiert ist, lediglich eine Drehkraft HTP von -1,36 auf.

Beispiel 8

Zu der flüssigkristallinen Basismischung des Beispiels 6 wird 1,0 Gew.-% des Produktes **11** des Beispiels 3 hinzugegeben und die Drehkraft HTP der Zusammensetzung bei 20°C bestimmt. Sie weist eine Drehkraft HTP von -13,2 auf.

Beispiel 9

Zu der flüssigkristallinen Basismischung des Beispiels 6 wird 1,0 Gew.-% des Produktes **28** des Beispiels 5 hinzugegeben und die Drehkraft HTP der Zusammensetzung bei 20°C bestimmt. Sie weist eine Drehkraft HTP von -1,6 auf. ,

**Patentansprüche**

**1.** Chiraler Dotierstoff mit lateral alkyliertem Phenylbaustein der allgemeinen Formel I:

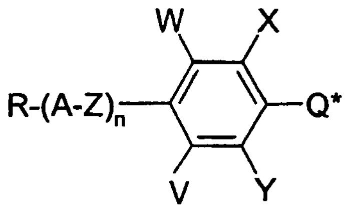

(I)

worin:

Q*: ein Baustein mit asymmetrischem C-Atom,
R: -H, einen unsubstituierten oder einen mindestens einfach durch Halogen substituierten Alkyl- oder Alkenylrest mit 1 bis 12 C-Atomen, worin auch eine oder mehrere nicht benachbarte $-CH_2-$ Gruppen durch -O- oder -S- und/oder -C≡C- ersetzt sein können, sowie F oder Cl,
A: unabhängig voneinander eine Einfachbindung, 1,4-Phenylen, worin auch ein oder mehrere H-Atome gegen F ersetzt sein können, 1,4-Cyclohexylen, worin auch eine oder zwei $CH_2$-Gruppen durch -O- ersetzt sein können, oder 1,4-Bicyclo(2.2.2)octanyl,
Z: unabhängig voneinander eine Einfachbindung, $-CH_2-CH_2-$, $-O-CH_2-$, $-CH_2-O-$, $-CF_2-O-$, $-O-CF_2-$, $-CF_2-CF_2-$ oder -C≡C-,
V, W: unabhängig voneinander, lineares oder verzweigtes, unsubstituiertes oder einfach bzw. mehrfach durch Halogen substituiertes Alkyl oder Alkyloxy mit 1 bis 12 C-Atomen, H, F oder Cl,
X, Y: unabhängig voneinander, lineares oder verzweigtes, unsubstituiertes oder einfach bzw. mehrfach durch Halogen substituiertes Alkyl oder Alkyloxy mit o bzw. p C-Atomen, wobei o bzw. p unabhängig voneinander, gleich oder verschieden, ganze Zahlen im Bereich von 1 bis 12 sind, H, F, Cl, wobei im Falle von H, F und Cl o bzw. p = 0 ist, oder Trimethylsilyl, und
n: 1 bis 3

bedeuten,
mit der Maßgabe, dass X und/oder Y entweder ein unsubstituierter oder ein Halogen substituierter Alkyl- oder Alkyloxyrest mit o bzw. p C-Atomen, wobei die Summe o + p ≥ 2 ist, oder ein Trimethylsilylrest ist.

2. Chiraler Dotierstoff gemäß Anspruch 1, **dadurch gekennzeichnet, dass** er als Baustein Q* mit asymmetrischem C-Atom die folgende Struktur

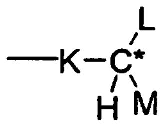

aufweist,
worin

K: $-CH_2-$, -O-, $-CH_2CH_2-$, $-OCH_2-$, $-CH_2O-$, $-OCF_2-$, $-CF_2O-$ -C≡C-, -CH=CH- oder eine Einfachbindung, und
L, M: Alkyl, Cycloalkyl, O-Alkyl, Alkenyl, Alkinyl oder Aryl, bedeuten, wobei L ungleich M sein muss.

3. Chiraler Dotierstoff gemäß Anspruch 1 oder 2, **dadurch gekennzeichnet, dass** er als Baustein Q* mit asymmetrischem C-Atom eine der folgenden Strukturen

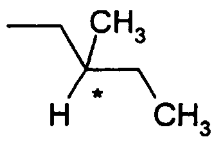 (h) 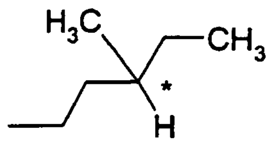 (i)

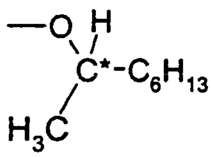 (m) 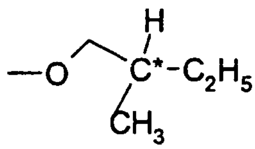 (r)

oder

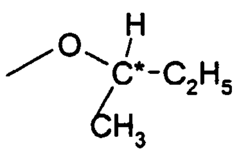 (s)

aufweist.

4. Chiraler Dotierstoff gemäß mindestens einem der vorhergehenden Ansprüche, **dadurch gekennzeichnet, dass** er einen der folgenden Grundkörper aufweist:

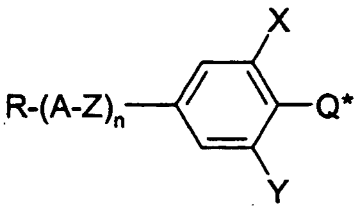

(Ia)

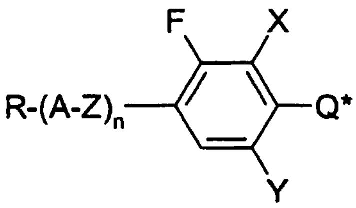

(Ib)

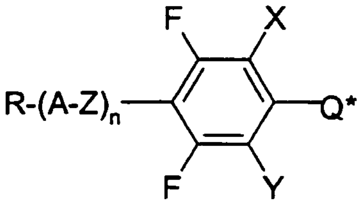

(Ic)

5. Verwendung von mindestens einem chiralen Dotierstoff gemäß mindestens einem der vorhergehenden Ansprüche in flüssigkristallinen Mischungen.

6. Flüssigkristalline Mischung enthaltend mindestens einen chiralen Dotierstoff gemäß mindestens einem der Ansprüche 1 bis 4.

7. Elektrooptisches Anzeigeelement enthaltend eine flüssigkristalline Mischung gemäß Anspruch 6.

**Claims**

1. Chiral dopant having a laterally alkylated phenyl structural element of the general formula I:

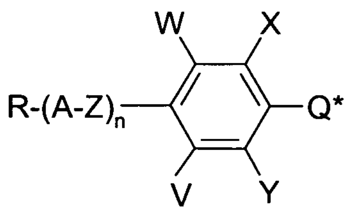

(I)

in which:

Q*: denotes a structural element having an asymmetrical C atom,
R: denotes -H, an alkyl or alkenyl radical having 1 to 12 C atoms which is unsubstituted or at least monosubstituted by halogen and in which one or more non-adjacent $-CH_2-$ groups may be replaced by -O- or -S- and/or -C≡C-, or F or Cl,
A: independently of one another, denote a single bond, 1,4-phenylene, in which, in addition, one or more H

atoms may be replaced by F, 1,4-cyclohexylene, in which, in addition, one or two $CH_2$ groups may be replaced by -O-, or 1,4-bicyclo[2.2.2]octanyl,

Z: independently of one another, denote a single bond, $-CH_2-CH_2-$, $-O-CH_2-$, $-CH_2-O-$, $-CF_2-O-$, $-O-CF_2-$, $-CF_2-CF_2-$ or -C≡C-,

V, W: independently of one another, denote linear or branched alkyl or alkoxy having 1 to 12 C atoms which is unsubstituted or mono- or polysubstituted by halogen, or H, F or Cl,

X, Y: independently of one another, denote linear or branched alkyl or alkoxy having o or p C atoms which is unsubstituted or mono- or polysubstituted by halogen, where o and p, independently of one another, are identical or different, and are integers in the range from 1 to 12, or H, F, Cl, where, in the case of H, F and Cl, o or p = 0, or trimethylsilyl, and

n: denotes 1 to 3,

with the proviso that X and/or Y is either an unsubstituted or a halogen-substituted alkyl or alkoxy radical having o or p C atoms, where the sum o + p is ≥ 2, or is a trimethylsilyl radical.

2. Chiral dopant according to Claim 1, **characterised in that** it contains, as structural element Q* having an asymmetrical C atom, the following structure

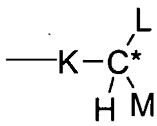

in which

K: denotes $-CH_2-$, -O-, $-CH_2CH_2-$, $-OCH_2-$, $-CH_2O-$, $-OCF_2-$, $-CF_2O-$, -C≡C-, -CH=CH- or a single bond, and

L, M: denote alkyl, cycloalkyl, O-alkyl, alkenyl, alkynyl or aryl, where L must be different from M.

3. Chiral dopant according to Claim 1 or 2, **characterised in that** it contains, as structural element Q* having an asymmetrical C atom, one of the following structures

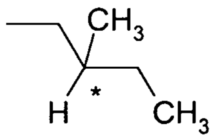 (h) 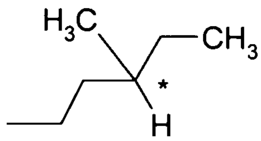 (i)

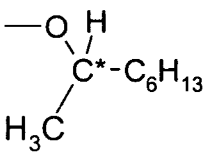 (m) 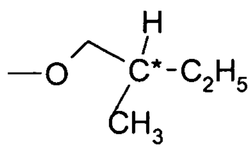 (r)

or

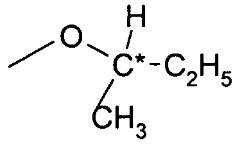 (s).

4. Chiral dopant according to at least one of the preceding claims, **characterised in that** it contains one of the following structures:

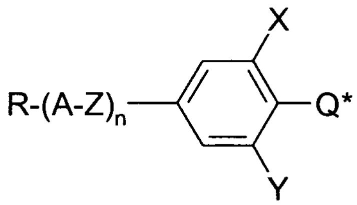

(Ia)

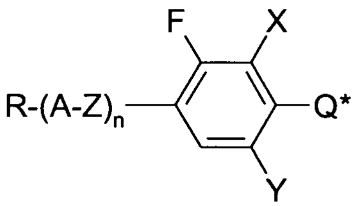

(Ib)

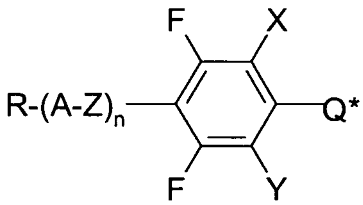

(Ic)

5. Use of at least one chiral dopant according to at least one of the preceding claims in liquid-crystalline mixtures.

6. Liquid-crystalline mixture comprising at least one chiral dopant according to at least one of Claims 1 to 4.

7. Electro-optical display element containing a liquid-crystalline mixture according to Claim 6.

**Revendications**

1. Dopant chiral comportant un élément structurel phényle alkylaté latéralement de la formule générale I :

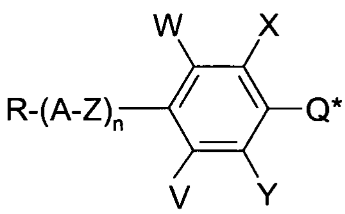

(I)

dans laquelle :

Q* : représente un élément structurel comportant un atome de C asymétrique,
R : représente -H, un radical alkyle ou alkényle comportant de 1 à 12 atomes de C qui est non substitué ou au moins mono- substitué par halogène et où un ou plusieurs groupes $-CH_2-$ non adjacents peuvent être remplacés par -O- ou -S- et/ou -C≡C-, ou F ou Cl,
A : indépendamment les uns des autres, représentent une liaison simple, 1,4-phénylène, où, en plus, un ou plusieurs atomes de H peuvent être remplacés par F, 1,4-cyclohexylène, où, en plus, un ou deux groupes $CH_2$

peuvent être remplacés par -O-, ou 1,4-bicyclo[2.2.2]octanyle,

Z : indépendamment les uns des autres, représentent une liaison simple, $-CH_2-CH_2-$, $-O-CH_2-$, $-CH_2-O-$, $-CF_2-O-$, $-O-CF_2-$, $-CF_2-CF_2-$ ou -C≡C-,

V, W : indépendamment les uns des autres, représentent alkyle ou alkoxy linéaire ou ramifié comportant de 1 à 12 atomes de C, qui est non substitué ou mono- ou polysubstitué par halogène, ou H, F ou Cl,

X, Y : indépendamment les uns des autres, représentent alkyle ou alkoxy linéaire ou ramifié comportant de o ou p atomes de C, qui est non substitué ou mono- ou polysubstitué par halogène, où o et p, indépendamment l'un de l'autre, sont identiques ou différents, et sont des entiers dans la plage de 1 à 12, ou H, F, Cl, où, dans le cas de H, F et Cl, o ou p = 0, ou triméthylsilyle, et

n : représente 1 à 3,

étant entendu que X et/ou Y sont un radical alkyle ou alkoxy soit non substitué, soit substitué par halogène comportant o ou p atomes de C, où la somme o + p est ≥ 2, ou sont un radical triméthylsilyle.

**2.** Dopant chiral selon la revendication 1, **caractérisé en ce qu'**il contient, en tant qu'élément structurel Q* comportant un atome de C asymétrique, la structure qui suit

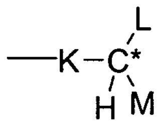

dans laquelle

K : représente $-CH_2-$, -O-, $-CH_2CH_2-$, $-OCH_2-$, $-CH_2O-$, $-OCF_2-$, $-CF_2O-$, -C≡C-, -CH=CH- ou une liaison simple, et

L, M : représentent alkyle, cycloalkyle, O-alkyle, alkényle, alkynyle ou aryle, où L doit être différent de M.

**3.** Dopant chiral selon la revendication 1 ou 2, **caractérisé en ce qu'**il contient, en tant qu'élément structurel Q* comportant un atome de C asymétrique, l'une des structures qui suivent

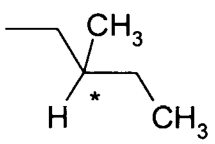 (h) 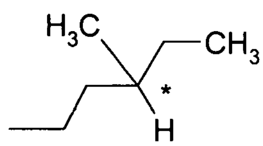 (i)

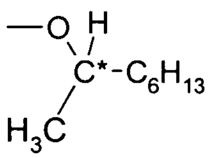 (m) 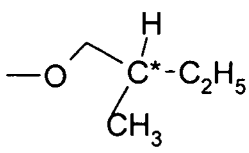 (r)

ou

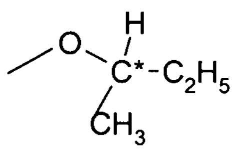 (s).

**4.** Dopant chiral selon au moins l'une des revendications précédentes, **caractérisé en ce qu'**il contient l'une des

structures qui suivent :

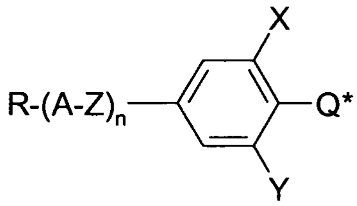

(Ia)

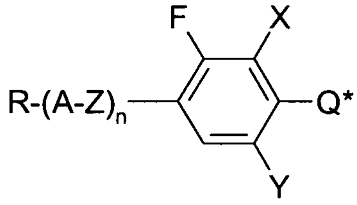

(Ib)

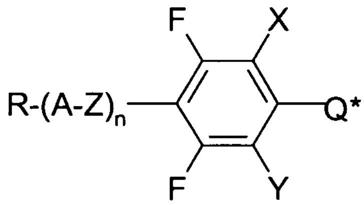

(Ic)

5. Utilisation d'au moins un dopant chiral selon au moins l'une des revendications précédentes dans des mélanges de cristaux liquides.

6. Mélange de cristaux liquides comprenant au moins un dopant chiral selon au moins l'une des revendications 1 à 4.

7. Elément d'affichage électro-optique contenant un mélange de cristaux liquides selon la revendication 6.